# EUROPÄISCHE PATENTSCHRIFT

(11) **EP 3 745 883 B1**
(45) Veröffentlichungstag und Bekanntmachung des Hinweises auf die Patenterteilung: **02.02.2022**
(21) Anmeldenummer: 19829498.5
(22) Anmeldetag: 17.12.2019
(51) Int. Cl.: A23L 25/00, A23C 11/10, A23C 20/02

(54) **HERSTELLUNGSVERFAHREN FÜR EIN FRISCHKÄSEÄHNLICHES LEBENSMITTELPRODUKT**
PRODUCTION METHOD FOR A CREAM-CHEESE-LIKE FOOD PRODUCT
PROCÉDÉ DE PRODUCTION D'UN PRODUIT ALIMENTAIRE DE TYPE FROMAGE FRAIS

(30) Priorität: 20.12.2018 DE 102018133055
(43) Veröffentlichungstag der Anmeldung: 09.12.2020
(73) Patentinhaber: Hochland SE, 88178 Heimenkirch (DE)
(72) Erfinder: MAHLER, Marie-Luise, 88161 Lindenberg (DE); HERRMANN-BÜRK, Dirk Michael, 88279 Amtzell (DE)
(74) Vertreter: Patent- und Rechtsanwälte Behrmann Wagner PartG mbB
(86) Internationale Anmeldenummer: PCT/EP2019/085586
(87) Internationale Veröffentlichungsnummer: WO 2020/127218

(56) Entgegenhaltungen:
- EP-A1- 2 926 670
- WO-A1-2017/050480
- DATABASE GNPD [Online] MINTEL; 14. Februar 2018 (2018-02-14), anonymous: "Plain Almondmilk Yogurt Alternative", XP55672489, gefunden im www.gnpd.com Database accession no. 5452747

## Beschreibung

Die Erfindung betrifft ein Verfahren zum Herstellen von frischkäseähnlichen, bevorzugt veganen, Lebensmittelprodukten, insbesondere einer Partikelsuspension auf Basis von Nüssen und/oder Kernen, ganz besonders bevorzugt auf Basis von Mandeln, gemäß Anspruch 1.

Das Ernährungsverhalten befindet sich in einem ständigen Wandel. Zurzeit geht der Trend hin zu veganen Produkten, wie veganen Brotaufstrichen, die versuchen herkömmliche, nicht vegane Produkte, wie beispielsweise Frischkäse auf Milchbasis zu imitieren. Dies gelingt bisher in der Praxis bei auf dem Markt befindlichen Produkten, insbesondere veganen Brotaufstrichen auf Nuss und/oder Kernbasis nur mäßig. Zum einen unterscheiden sich die bekannten Ersatz-Produkte deutlich hinsichtlich des Mundgefühls von klassischem Frischkäse und werden je nach Produkt als rau oder grobkörnig empfunden. Darüber hinaus zeichnen sich die zur Zeit angebotenen veganen Brotaufstriche, beispielsweise auf Cashewbasis durch einen eher grauen Farbeindruck aus, der sich deutlich von einer typischerweise weißen Farbe sowie einem hohen Helligkeitswert L* in CIELAB-Farbraum unterscheidet, wie das bei klassischem Frischkäse gegeben ist.

Ein optimiertes Verfahren zum Herstellen von frischkäseähnlichen Lebensmittelprodukten mit einem hohen Helligkeitswert ist in der WO 2017 050 480 A1 der Anmelderin beschrieben. Das bekannte Verfahren zeichnet sich dadurch aus, dass zunächst eine pastöse Masse aus getrockneten Nüssen und/oder Kernen hergestellt wird, die dann durch Zugabe von Wasser und fakultativ Öl in eine pumpfähige Masse gewandelt wird. Die pumpfähige Masse wird erhitzt und gleichzeitig oder daraufhin mechanisch behandelt, insbesondere hochdruckhomogenisiert. Im Gegensatz zu anderen bekannten Verfahren resultiert ein Produkt mit vergleichsweise hohen Helligkeitswerten, einer frischkäseähnlichen Textur sowie einer hohen Festigkeit, wie die von natürlichem Frischkäse auf Milchbasis. Allerdings ist die Variabilität des Fettgehaltes im Endprodukt begrenzt.

Ein anderes Verfahren zum Herstellen eines veganen Lebensmittelproduktes auf Kern oder Nussbasis ist beispielsweise in der EP 1 102 550 B1 beschrieben. Zum Herstellen des Lebensmittelproduktes werden Kerne oder Nüsse unter Zugabe von Wasser zu einer rührbaren, breiigen Substanz verarbeitet, zu der dann Öl hinzugegeben wird. Zu der aus der Ölzugabe resultierenden Substanz wird dann zur abschließenden Einstellung der Konsistenz Säure zugegeben.

Auch die DE 198 34 925 C5 beschreibt ein Verfahren zum Herstellen eines veganen Lebensmittelproduktes auf Basis von Kernen oder Nüssen, wobei gemäß der Lehre der Patentschrift eine rührbare Substanz aus der Zerkleinerung von Kernen oder Nüssen unter Zugabe von Wasser in einem gewissen Gewichtsverhältnis hergestellt wird, welcher Öl oder flüssig gemachtes Fett, wiederum in einem bestimmten Gewichtsverhältnis, zugegeben wird, wobei dann eine abschließende Säuerung zur Einstellung der Konsistenz erfolgt.

Ebenso beschäftigt sich die DE 20 2007 017 700 U1 mit der Herstellung von Frischkäseersatzprodukten, wobei die Druckschrift lehrt, körnerfrei zerkleinerte Cashew-Kerne unter Rühren mit Sojamilch in einem bestimmten Mengenverhältnis zu mischen, dann zu pasteurisieren, abzukühlen und durch Zugabe von Mikroorganismen zu säuern, wodurch eine Dickmilch ähnliche Substanz gewonnen wird. Aus dieser wird dann, wie bei der klassischen Käseherstellung eine Molke ähnliche Flüssigkeit abgetrennt und auf diese Weise eine Rohmasse mit gewünschter Konsistenz erhalten, wobei die Rohmasse durch Zugabe von Gewürzen und/oder Kräutern geschmacklich veredelt werden kann. Die Druckschrift beschreibt weiter, dass eine cremige Konsistenz durch das Verarbeiten der Rohmasse mit einer Quarkmühle erreicht werden kann.

Die GB 874 537 A beschreibt ein proteinhaltiges Lebensmittelprodukt auf Basis von Ölsaat, wobei zunächst das Pflanzenprotein von dem beinhalteten Öl getrennt wird. Dabei wird eine wässrige Lösung des pflanzlichen Proteins hergestellt, wobei der wässrigen Proteinlösung Fett zugegeben wird, bevor diese erhitzt wird. Gemäß dieser Lehre der Druckschrift entsteht durch das Erhitzen eine Art Bruch, der ähnlich wie klassischer Käsebruch verarbeitet werden kann.

Aus der DE 20 2011 002 097 U1 ist ebenfalls ein Frischkäseersatzprodukt auf Basis von Nüssen bekannt. Dabei werden Nüsse zunächst über mehrere Stunden in Wasser eingeweicht und danach zu Püree zermahlen, welches mit Wasser vermischt, erhitzt und danach wieder abgekühlt und mit Bakterienkulturen versetzt wird. Nach einer zehnstündigen Fermentation wird die Trockenmasse mit Wasser auf 33% eingestellt und das Produkt wird pasteurisiert.

Die US 4,639,374 A beschäftigt sich nicht mit frischkäseähnlichen Lebensmittelprodukten, sondern mit einer auf Basis von Mandeln, Zucker und Emulgatoren hergestellten Mandelpaste als Basis für Getränke, beispielsweise durch Mischen der Mandelpaste mit Milch oder zur Weiterverarbeitung zu einem Dessert. Im Rahmen des bekannten Verfahrens werden die Mandeln gemahlen, wobei die Verarbeitung unter Zugabe von Emulgatoren und großen Mengen von Zucker erfolgt, welcher gemäß der Lehre der Druckschrift wesentlich ist für den auf Walzen durchgeführten Zerkleinerungsvorgang. Die Druckschrift erwähnt in Beispiel 4 den Einsatz eines Homomixers und eines Homogenisators, wobei die Textur des Produktionsergebnisses nicht beschrieben ist. Nach Angaben in der Druckschrift bildet sich unterstützt durch die zugegebenen Emulgatoren eine Öl in Wasser Emulsion. Die Druckschrift beschreibt einen möglichen Einsatz von im geringen Maß (zu 50%) entfetteten Mandeln. Da Mandeln üblicher Weise einen natürlichen Fettgehalt von 55 Gew% aufweisen, hat das im Rahmen des aus der US-Schrift bekannten Verfahrens eingesetzte Mandelmaterial mit einem resultierenden Restfettgehalt von 27,5 Gew.% einen, verglichen mit dem im Rahmen der der vorliegenden Erfindung zum Einsatz kommenden Mandelmehl mit einem maximalen Fettgewichtsprozentanteil von 20%, hohen Fettgehalt.

Die US 2011/0064862 A1 beschäftigt sich ebenfalls nicht mit frischkäseähnlichen Produkten, sondern mit der Herstellung einer Milch auf Nussbasis, wobei eine Nussbutter hierzu mit Wasser gemischt wird. Bei solchen milchähnlichen Produkten steht stärker die Stabilisierung der Produkte als der Strukturaufbau im Vordergrund, welcher sich deutlich von frischkäseähnlichen Produkten, die sich durch eine erhöhte Festigkeit auszeichnen, unterscheidet.

Die DE 10 2006 037 608 A1 beschreibt ein Verfahren zur Herstellung eines Brotaufstrichs. Die zum Einsatz kommenden Zutaten werden bereits in einem ersten Schritt unter Zugabe von Wasser allesamt gemeinsam zerkleinert. Gemäß der Lehre der Druckschrift werden die eingesetzten Ölsaaten bevorzugt bereits im Vorfeld eingeweicht. Im Ergebnis ist bei dem bekannten Verfahren, bei welchem nicht zunächst eine pastöse Masse hergestellt wird, die dann in einem separaten Schritt durch Zugabe von Wasser zu einer pumpfähigen Masse weiterverarbeitet wird, mit der Bildung großer Agglomerate/Partikel zu rechnen.

Die WO 2013/010037 A1 (EP 2731451 A1) ist eine alternative Methode zum Herstellen eines Käserersatzproduktes auf Basis von Mandeln, wobei die Druckschrift lehrt, Faserstoffe der Mandeln abzutrennen. Wesentliches Merkmal der bekannten Herstellungsmethode ist der Einsatz des vernetzenden Enzyms (Transglutaminase).

Aus der US 2008/063752 A1 ist ein Verfahren zur Herstellung von Joghurt, Trinkjoghurt sowie fermentierten Getränken, wie Mandelmilch bekannt. Auf eine Hochdruckhomogenisierung folgt ein Erhitzungsschritt.

Aus der EP 2 926 670 A1 ist ein Verfahren zum Herstellen eines Käseersatzproduktes bekannt, welches sich unter anderem durch einen hohen Fettgehalt auszeichnen soll. Als eine Möglichkeit wird im Widerspruch hierzu der Einsatz von Entfetteten (defatted) Mandeln beschrieben. Über den Fettgehalt schweigt sich die Druckschrift aus, so dass davon ausgegangen werden muss, dass der Fettgehalt 0 Gew% betragen muss, da die Mandeln gemäß der einzigen Offenbarung ja entfettet sind. Um dies zu erreichen ist ein aufwendiger Destilationsprozeß unter vorheriger Zugabe eines Fettlösers, beispielsweise Hexan notwendig. Auch offenbart die Druckschrift nicht, in welcher Form die entfetteten Mandeln eingesetzt werden oder zu welchem Zeitpunkt und auf welche Verfahrensweise.

Das online recherchierte Dokument: DATABASE GNPD [online], MINTEL; 14. Februar 2018, anonymous:"Plain Almondmilk Yogurt Alternative", XP55672489, gefunden im www.qnpd.com Database accession no. 5452747 beschäftigt sich mit einem Joghurtgetränk auf Mandelmilchbasis.

Ausgehend von dem vorgenannten Stand der Technik liegt der Erfindung die Aufgabe zugrunde, ein, insbesondere gegenüber dem in der WO 2017 050 480 A1 beschriebenen, Verfahren weiter verbessertes Verfahren zum Herstellen eines Lebensmittelproduktes, konkret eines Frischkäseersatzproduktes, auf Basis von Nüssen und/oder Kernen anzugeben, welches hinsichtlich seines Mundgefühls dem von klassischem Frischkäse auf Milchbasis erzeugten Mundgefühl möglichst nahekommt. Ganz besonders bevorzugt soll das Verfahren es ermöglichen, Lebensmittelprodukte herzustellen, deren Helligkeit L* in CIELAB-Farbraum einem klassischen Frischkäse noch näher kommt - insbesondere soll ein natürlicher, noch weißerer Farbeindruck erzielt werden. Ganz besonders bevorzugt soll das Verfahren so ausgebildet sein, dass dieses größere Freiheitsgrade im Hinblick auf die Zusammensetzung, insbesondere im Hinblick auf die Wahl der Art und Menge des eingesetzten Fettes/der eingesetzten Fette ermöglicht/einräumt.

Diese Aufgabe wird hinsichtlich des Verfahrens mit den Merkmalen des Anspruchs 1 gelöst. Vorteilhafte Weiterbildungen der Erfindung sind in den Unteransprüchen angegeben.

Zur Vermeidung von Wiederholungen sollen verfahrensgemäß offenbarte Merkmale auch als vorrichtungsgemäß offenbart gelten.

Ebenso sollten vorrichtungsgemäß offenbarte Merkmale auch als verfahrensgemäß offenbart gelten . Der Erfindung liegt der Gedanke zugrunde, insbesondere in Abgrenzung zu dem aus der WO 2017 050 480 A1 der Anmelderin bekannten Verfahren, die pumpfähige Masse herzustellen unter Einsatz von teilentöltem (teilentfettetem) Mehl aus Nüssen und/oder Kernen, bevorzugt durch Einsatz von teilentöltem (teilentfettetem) Mandelmehl, ganz besonders bevorzugt ausschließlich von teilentöltem (teilentfettetem) Mandelmehl. Dieses wird zur Herstellung der pumpfähigen Masse mit Wasser gemischt sowie Fett, insbesondere in Form von Öl und/oder festem und/oder verflüssigtem Fett, wobei durch die Fettzugabe die Einstellung des Gesamtfettgehaltes des

Lebensmittelproduktes erfolgt. Bevorzugt wird/werden dabei ausschließlich pflanzliches Fett bzw. ausschließlich pflanzliche Fette zugegeben, um somit ein veganes Frischkäseersatzprodukt zu erhalten. Zu den einsetzbaren pflanzlichen Fetten und Ölen gehören beispielsweise, ohne darauf beschränkt zu sein: Sonnenblumen-, Raps-, Oliven-, Erdnuss- , Distel-, Maiskeim-, Mandel- und Walnussöl, aber auch Kakao-, Kokos-, und/oder Palmfett. Alternativ ist es denkbar, für zumindest einen Teil des zugesetzten Fettes tierisches Fett, beispielsweise Milchfett, einzusetzen, wobei dann das resultierende frischkäseähnliche Produkt selbstverständlich nicht mehr vegan ist. Wie später noch erläutert werden wird, ermöglicht die Erfindung, dass das zugesetzte pflanzliche und/oder tierische Fett raffiniert, wie zum Beispiel gebleicht und/oder desodoriert verwendet werden können/kann. Auch ist der Einsatz in nativer Form sowie als Mischung aus raffiniertem und nativem Fett möglich, um somit die Produkteigenschaften, insbesondere Geruch und/oder Geschmack und/oder Farbe zu beeinflussen. Der absolute Fettgehalt, d.h. der Gesamtfettgehalt des Lebensmittelproduktes wird auf einen Wert zwischen 0,92 und 30 Gew.-% eingestellt. Bevorzugt wird je Gramm Protein aus Kernen und/oder Nüssen, insbesondere je Gramm Mandelprotein, eine Gesamtfett- bzw. Ölmenge im fertigen Lebensmittelprodukt und insbesondere auch in der pumpfähigen Masse von 6 g nicht überschritten.

Der Einsatz von teilentöltem Mehl, insbesondere ausschließlich von teilentöltem Mandelmehl, führt überraschend zu einem verbesserten Verfahren sowie zu einem verbesserten Endprodukt. Dies hat mehrere Gründe. So ist es gemäß dem erfindungsgemäßen Verfahren nicht notwendig, zur Herstellung der pumpfähigen Masse zunächst eine pastöse Masse aus getrockneten, in der Regel gerösteten Kernen und/oder Nüssen herzustellen -vielmehr ist es zum Herstellen des teilentölten Mehles möglich und bevorzugt, nicht-getrocknete Nüsse und/oder Kerne, insbesondere nicht-getrocknete Mandeln einzusetzen. Anders ausgedrückt war man bei dem aus der WO 2017 050 480 A1 bekannten Verfahren bestrebt, durch Trocknen, Rösten und/oder Ölzugabe bei der Zerkleinerung den Wassergehalt der zum Einsatz kommenden Kerne und/oder Nüsse auf geringe Werte, insbesondere von maximal 2 Gew.-% zu begrenzen. Durch den erfindungsgemäßen Einsatz von teilentöltem Mehl aus Kernen und/oder Nüssen können Kerne und/oder Nüsse mit hohen Feuchtigkeitsgehalten (Wassergehalten), bevorzugt zwischen 4 und 10 Gew.% verarbeitet werden. Dabei stellt sich die Restfeuchte, d.h. der Wassergehalt im teilentölten Mandelmehl durch Verdunstung von Wasser im noch warmen Presskuchen und während der Vermahlung des Presskuchens zu Mehl ein. Der bevorzugte Verzicht auf eine Trocknung oder Röstung der zur Herstellung des teilentölten Mehls eingesetzten Kerne und/oder Nüsse, insbesondere Mandeln führt dann dazu, dass das eingesetzte, teilentölte Mehl im Gegensatz zu den gemäß dem in der WO 2017 050 480 A1 beschriebenen Verfahren zum Einsatz kommenden gerösteten Nüssen und/oder Kernen keine oder zumindest weniger Maillard-Reaktionsprodukte, unter anderem also eine geringe Braunfärbung aufweist - das erfindungsgemäß zum Einsatz kommende teilentölte Mehl zeichnet sich daher bereits durch eine hellere Farbgebung und einen weniger intensiven Nuss- und/oder Kerngeschmack aus. Dies führt dann im Ergebnis zu frischkäseähnlichen Lebensmittelprodukten mit höheren L*-Werten im CIELAB-Farbraum, insbesondere von ≥ 80, noch weiter bevorzugt von ≥ 82.

Darüber hinaus eröffnet das erfindungsgemäße Verfahren große Freiheitsgrade im Hinblick auf die Einstellung und Zusammensetzung des Gesamtfettgehaltes. Während bei dem in der WO 2017 050 480 A1 bekannten Verfahren zwingend der Gesamtfettgehalt vollständig oder zumindest zum größten Teil aus Mandelöl besteht, eröffnet das erfindungsgemäße Verfahren die Möglichkeit, die Fettart und -menge in weiten Grenzen zu wählen. So kann beispielsweise zu einem deutlich höheren Gewichtsprozentanteil ernährungsphysiologisch wertvolleres Fett eingesetzt werden. Besonders bevorzugt ist es zum Herstellen der pumpfähigen Masse, raffiniertes und/oder gefiltertes und/oder gebleichtes und/oder desodoriertes Fett (hierunter wird auch Öl verstanden) einzusetzen.

Insgesamt kann aus dem erfindungsgemäßen Verfahren, insbesondere beim Einsatz von teilentöltem Mandelmehl und/oder Cashewmehl, ein frischkäseähnliches Lebensmittelprodukt mit weißerem Farbeindruck, insbesondere mit höheren L*-Werten im CIELAB-Farbraum, hergestellt werden, welches sich, insbesondere bei Verzicht auf eine Trocknung und/oder Röstung der Kerne und/oder Nüsse zum Herstellen des teilentöltem Mehls, durch weniger intensiven Nuss- und/oder Kerngeschmack auszeichnet und darüber hinaus einen großen Anteil an ernährungsphysiologisch wertvollem/n Fett/en und/oder behandeltem/n, insbesondere raffiniertem/n und/oder gefiltertem/n und/oder gebleichtem/n und/oder desodoriertem/n Fett/en auszeichnet.

Wesentlich ist, dass die Zutaten, insbesondere die Menge an teilentöltem Mehl sowie von zugegebenem Fett (hierunter fällt auch Öl) so gewählt wird, dass das resultierende Lebensmittelprodukt die beanspruchte Festigkeit aus dem Wertebereich zwischen 0,2 N und 7,0 N, bevorzugt zwischen 0,5 N und 2,5 N aufweist Die untere Trockenmassegrenze wird bevorzugt eingestellt auf einen Wert aus einem Wertebereich zwischen 6% und 60%, weiter bevorzugt auf einen Wert zwischen 12% und 60 %, ganz besonders bevorzugt zwischen 15% und 40%. Die obere Grenze des Trockenmassegewichtsanteils beträgt 60 Gew.-%, ganz besonders bevorzugt wird die obere Grenze des Trockenmassegewichtsanteils gewählt zwischen 40 Gew.-% und <60 Gew.-%. Noch weiter bevorzugt beträgt sie <40 Gew.-%. Durch Zugabe des Fettes und des Wassers kann der Gesamtfettgehalt sowie der Trockenmasseanteil der pumpfähigen Masse und in der Folge des Endproduktes bzw. Lebensmittelproduktes eingestellt bzw. vorgegeben werden.

Wesentlich ist, dass die Mengenverhältnisse so gewählt werden, dass das resultierende Lebensmittelprodukt eine Festigkeit aus dem beanspruchten Bereich aufweist, wobei, insbesondere bei geringen Trockenmasseanteilen, insbesondere von <15% oder <12%, der Zusatz von Hydrokolloiden vorteilhaft sein kann. Ganz besonders bevorzugt wird jedoch auf den Zusatz von Hydrokolloiden verzichtet.

Grundsätzlich kann auf die Zugabe von Zuckern verzichtet werden, was eine bevorzugt Ausführungsform der Erfindung darstellt. Alternativ ist es möglich und im Rahmen einer alternativen Ausführungsform bevorzugt, Zucker zuzusetzen. Bevorzugt erfolgt die Zugabe dabei ausschließlich zur Einstellung einer gewünschten Süße bzw. eines gewünschten Geschmacksprofils. Insbesondere erfolgt die Zugabe von Zucker im Gegensatz zu dem in der US 4,639,374 A beschriebenen Verfahren bevorzugt nicht aus technologischen Gründen, insbesondere nicht derart, dass der Zucker als Hilfsmittel zur Zerkleinerung von Komponenten genutzt wird. Daher ist es auch möglich, den Zucker, was bevorzugt ist, vorzugsweise ausschließlich, in flüssiger Form, insbesondere als Invertzucker, zuzugeben. Zusätzlich oder alternativ zur Zugabe von Zucker in flüssiger Form ist es möglich, Zucker in Pulverform zuzugeben. Bevorzugt wird eine einzige Zuckerart oder mehrere Zuckerarten der folgenden Gruppe von Zuckerarten zugegeben: Saccharose, Glucose, Fruktose, Invertzucker. Für den Fall der Zugabe von Zucker ist es bevorzugt, diesen in einer Menge zwischen 0,1 Gew.-% und 15 Gew.-% bezogen auf das Gesamtgewicht der pumpfähigen Masse zuzugeben. Die Zuckerzugabe kann zusammen mit einer geschmacksgebenden Zutat, insbesondere Erdbeere, Schokolade oder einer Zubereitung erfolgen. Bevorzugt erfolgt die Zugabe des Zuckers während der Herstellung der pumpfähigen Masse, ganz besonders bevorzugt vor und/oder während des Mischens. Besonders bevorzugt erfolgt die Zugabe vor dem Erhitzen der pumpfähigen Masse. Im Falle des Einsatzes von flüssigem Zucker kann dieser auch nach dem Heißhochdruckhomogenisieren und/oder (falls vorgesehen) nach dem Kalthochdruckhomogenisieren zugegeben werden.

Zusätzlich oder alternativ zur Zugabe von Zucker ist die zugabe von mindestens einem Zuckerersatzstoff als Süßungsmittel denkbar, bevorzugt ebenfalls ausschließlich zur Einstellung eines gewünschten Geschmackprofils.

Das zum Einsatz kommende, teilentölte Mehl aus Nüssen und/oder Kernen zeichnet sich durch einen Fettgewichtsprozentanteil zwischen 5 und 20 Gew.-%, vorzugsweise zwischen 10 und 20 Gew.-%, weiter bevorzugt von, zumindest näherungsweise, 15 Gew.-%, aus. Bevorzugt beträgt der Proteingewichtsanteil zwischen 43 und 57 Gew.-%, vorzugsweise zwischen 48 und 52 Gew.-%, ganz besonders bevorzugt, zumindest näherungsweise, 50 Gew.-%. Besonders bevorzugt ist es, wenn das zum Einsatz kommende teilentölte Mehl aus Nüssen und/oder Kernen eine Partikelgrößenverteilung aufweist, die gekennzeichnet ist durch einen mittleren Partikeldurchmesser (Median der Volumenverteilung) x50,3 zwischen 50µm und 500µm, vorzugsweise zwischen 100µm und 400µm, ganz besonders bevorzugt zwischen 100µm und 300µm. Besonders bevorzugt ist ein mittlerer Partikeldurchmesser x50,3 von, zumindest näherungsweise 150µm. Sämtliche in der vorliegenden Offenbarung angegebenen Parameter zu Partikelgrößenverteilungen bzw. Partikeldurchmessern des zum Einsatz kommenden teilentölten Mehls wurden in wässriger Lösung mit einem partica laser scattering particle size distribution analyzer LA960 der Firma Horiba Scientific ermittelt, vorliegend mit einer Zirkulationsgeschwindigkeit 2 und einer Rührgeschwindigkeit 2, wobei jeweils eine Beschallung der Probe vor der Messung mit Ultraschall in Stärke 2 für 1min erfolgte. Das zum Einsatz kommende teilentölte Mehl aus Nüssen und/oder Kernen zeichnet sich aus durch einen Wassergehalt zwischen 4 und 9 Gew.-%, vorzugsweise von, zumindest näherungsweise, 6 Gew.-% aus. Bevorzugt beträgt der pH-Wert des teilentölten Mehls aus Nüssen und/oder Kernen zwischen 6,2 und 6,8, ganz besonders bevorzugt beträgt er 6,5. Die in vorliegender Offenbarung angegebenen Fett- bzw. Ölgewichtsprozentanteile wurden nach der Weibull-Stoldt VDLUFA C 15.2.3 Methode ermittelt. Die in vorliegender Offenbarung angegebenen Proteingehalte bzw. -anteile wurden nach der Dumas-Methode ermittelt.

Die vorgenannten Analysemethoden zur Bestimmung des Fett- sowie Proteingehaltes liegen, soweit nicht anderweitig angegeben, auch sämtlichen folgenden Angaben zum Fettgehalt, Proteingehalt in vorliegender Offenbarung zugrunde.

Gemäß einer bevorzugten Ausführungsform kann die Herstellung des Mandelmehls Bestandteil des erfindungsgemäßen Verfahrens sein. Bevorzugt werden hierzu Mandeln zunächst blanchiert, woraufhin dann, bevorzugt in einer Ölmühle, Mandelöl bis zum Erreichen des vorgenannten Fettgehaltes entzogen wird. Der erhaltene Mandelpresskuchen wird gemahlen und so das zum Einsatz kommende teilentölte Mandelmehl erhalten.

Dem vorgeschlagenen Verfahren liegt weiterhin die Erkenntnis zugrunde, dass sich auf dem Markt befindliche Frischkäseersatzprodukte auf Nuss oder Kernbasis im Hinblick auf den Aufbau ihrer Mikrostrukturebene deutlich von klassischem Frischkäse auf Milchbasis unterscheiden. Es wird vermutet, dass dieser Unterschied ursächlich ist für das unterschiedliche Mundgefühl von bekannten Frischkäseprodukten zu klassischem Frischkäse. Es wird auch vermutet, dass die von Frischkäse unterschiedliche Mikrostruktur verantwortlich ist für den eher grauen Farbeindruck, den bekannte Ersatz-produkte beim Konsumenten bewirken.

Eine mikroskopische Analyse von bekannten veganen Frischkäseersatzprodukten hat ergeben, dass deren Mikrostrukturebene im Gegensatz zu klassischem Frischkäse auf Milchbasis nicht von einer reinen Mikropartikelgelsuspension gebildet ist, bei der die Fettphase vollständig in Mikrogelpartikel eingebaut ist, wie dies bei klassischem Frischkäse der Fall ist, sondern bei mikroskopischer Analyse deutlich sichtbar eine separate Fettphase, bestehend aus Fetttropfenpartikel umfasst. Auf Basis dieser Erkenntnis wurde dann das erfindungsgemäße Verfahren entwickelt, welches so gestaltet ist, bei dem, insbesondere milchfreien, bevorzugt veganen, Lebensmittelprodukt Mikrostrukturen zu schaffen, die mit den Mikrostrukturen von klassischem Frischkäse vergleichbar sind, bei denen also die Fettphase zumindest weitestgehend, bevorzugt, zumindest näherungsweise, vollständig in Mikrogelpartikel eingebaut ist.

Neben einer hinreichenden Zerkleinerung der Fettpartikel und dem Einbau der Fettphase in die Mikrogelpartikel des Lebensmittelproduktes ist es gemäß der der Erfindung zugrundeliegenden Erkenntnis notwendig, das Verfahren so zu gestalten, dass eine Partikelgrößenverteilung des Lebensmittelproduktes bestimmte Rahmenbedingungen (Kennwerte) erfüllt und dabei bevorzugt einer typischen Partikelgrößenverteilungen von klassischen Frischkäsen auf Milchbasis möglichst nahe kommt. Dies vor-ausgeschickt, werden im Folgenden das erfindungsgemäße Verfahren sowie das frischkäseähnliche, ganz besonders bevorzugt vegane Lebensmittelprodukt erläutert.

Wie erläutert ist es wesentlich, dass die pumpfähige Masse durch Vermischen von teilentöltem Mehl, Wasser und Fett hergestellt wird, wobei das Vermischen beispielsweise durch Verrühren, bevorzugt in einem Kochmischer erfolgt. Ganz besonders bevorzugt ist es, wenn das teilentölte Mehl aus hellen Nüssen und/oder hellen Kernen hergestellt wird bzw. ist, um auch einen ähnlich weißen Farbeindruck zu erhalten wie Frischkäse. Besonders bevorzugt wird ausschließlich teilentöltes Mandelmehl eingesetzt, wobei im Rahmen der Erfindung auch Mischungen aus teilentöltem Mandelmehl und anderen teilentölten Nuss- und/oder Kernmehlen eingesetzt werden können oder alternativ auch auf Mandelmehl zugunsten anderer teilentölter Nuss und/oder Kernmehle, wie teilentöltem Cashewkernmehl und/oder Walnussmehl und/oder teilentöltem Erdnussmehl und/oder teilentöltem Haselnussmehl, etc. verzichtet werden kann. Bevorzugt ist der Einsatz von mindestens 50 -Gew.%, weiter bevorzugt mindestens 80 Gew.-% Mandelmehl bezogen auf die Gesamtmenge an eingesetztem teilentöltem Nuss- und/oder Kernmehl. Das vorgeschlagene Verfahren hat dann, wie bereits erwähnt einen positiven Einfluss auf die Helligkeit L* im CIELAB-Farbraum, welche bei erfindungsgemäßer bzw. konkreter Ausführung des Verfahrens (deutlich) erhöht wird, insbesondere durch den Einsatz von teilentöltem Mehl, bevorzugt von Mandelmehl, im Gegensatz zu dem Einsatz einer Paste aus gerösteten Nüssen und/oder Mandeln.

Ein weiteres wesentliches Merkmal des vorgeschlagenen Verfahrens besteht darin, dass dieses, wie in der WO 2017 050 480 A1 beschrieben zum Gewinnen des Lebensmittelproduktes aus der pumpfähigen Masse mindestens einen Erhitzungsschritt (Erwärmungsschritt) und mindestens einen mechanischen Bearbeitungsschritt umfasst, die so gestaltet bzw. durchzuführen sind, dass das resultierende Lebensmittelprodukt hinsichtlich des Aufbaus seiner Mikrostrukturebene zumindest näherungsweise der Mikrostrukturebene von klassischem Frischkäse entspricht, dass also ein Großteil der Fettphase, vorzugsweise zumindest näherungsweise die gesamte Fettphase nicht separat, d.h. als eigenständige bei mikroskopischer Analyse sichtbare Phase vorliegt, sondern eingebaut ist in die Mikrogelpartikel des Lebensmittelsproduktes, dass also eine möglichst weitgehende bzw. reine Mikrogelpartikelsuspension vorliegt und zudem der mittlere Partikeldurchmesser x50,3 des nicht durch ein Lösungsmittel aufgeschlossenen, d.h. unveränderten Lebensmittelproduktes, gemessen in destilliertem Wasser, insbesondere mittels eines Laserbeugungsspektrometers, <100 µm, bevorzugt zwischen 10 µm und 40 µm, beträgt, was wiederum dem mittleren Partikeldurchmesser x50,3 klassischer Frischkäseprodukte entspricht. Ganz wesentlich ist dabei, dass die mechanische Bearbeitung so ausgeführt wird, dass ein ausreichend hoher Druck und/oder Scherkrafteintrag in die pumpenfähige Masse erfolgt, um die gewünschte Zerkleinerung sowie Homogenisierung und Einarbeitung der Fettphase in die Mikrogelpartikel sicherzustellen. Anders ausgedrückt liegt mindestens ein Peak, ganz besonders bevorzugt ein globales Maximum der Partikelgrößenverteilung eines solchen

Lebensmittelproduktes bei einem x3 Partikeldurchmesser der größer ist als 10 µm vor. Die, bevorzugt wie zuvor beschrieben gemessene bzw. bestimmte Partikelgrößenverteilung des nicht aufgeschlossenen, d.h. unveränderten Lebensmittelproduktes weist bei ausreichender Erhitzung und ausreichender mechanischer Bearbeitung mindestens einen Peak (Maximum), ganz besonders bevorzugt ein globales Maximum, bei einem Partikeldurchmesser x3 >10 µm auf.

Als Nachweis dafür, dass die Fettphase im gewünschten Maß, bevorzugt zumindest weitgehend, weiter bevorzugt vollständig, nicht als freie Phase vorliegt, sondern erfindungsgemäß in die Mikrogelpartikel des Lebensmittelproduktes eingebaut ist, muss bei korrekter Erhitzung und mechanischer Bearbeitung eine weitere Bedingung erfüllt sein. Das Lebensmittelprodukt muss nämlich in einem teilaufgeschlossenen Zustand, welcher erhalten wird durch Mischen eines Gewichtsteils des (unveränderten) Lebensmittelproduktes mit neun Gewichtsteilen einer SDS-EDTA-Lösung (0,25-% SDS; 0,25% EDTA) eine Partikelgrößenverteilung aufweisen, die sich von der Partikelgrößenverteilung des nicht aufgeschlossenen Lebensmittelproduktes (siehe oben) durch mindestens einen weiteren bzw. zusätzlichen Peak bei einem Partikeldurchmesser x3 <10 µm auszeichnet. Anders ausgedrückt ist im teilaufgeschlossenen Zustand in einem Partikelgrößenbereich <10 µm ein Peak zu beobachten, insbesondere ein lokales Maximum, der im nicht aufgeschlossenen Zustand nicht auftritt. Dieser zusätzliche Peak im teilaufgeschlossenen Zustand, wird nämlich erzeugt von Fett- oder Öltröpfchen der Fettphase des Lebensmittelproduktes, die durch die Zugabe der SDS-EDTA-Lösung aus den Mikrogelpartikeln herausgelöst wurden und somit als freie Phase vorliegen und damit die Partikelgrößenverteilung beeinflussen. Das Vorliegen des zusätzlichen Peaks in einem Partikelgrößenbereich von <10 µm belegt somit, dass der Erhitzungs- und mechanische Bearbeitungsschritt erfindungsgemäß bzw. korrekt durchgeführt wurde, dass also die pumpfähige Masse einer aus-reichenden Erhitzung und einem ausreichenden mechanischen Stress, insbesondere einer Druck- und/oder Scherbeanspruchung ausgesetzt wurde, um die Fettphase, zumindest weitgehend in die Mikrogelpartikel einzubinden.

Zusätzlich zu dem vorerwähnten mechanischen Bearbeitungsschritt kann bei Bedarf noch (mindestens ein) weiterer mechanischer Bearbeitungsschritt, insbesondere vor dem vorerwähnten Bearbeitungsschritt, ganz besonders bevorzugt vor dem Erhitzungsschritt durchgeführt werden, insbesondere um Fetttropfen aufzubrechen und zu zerkleinern. Auch hier bietet sich eine Hochdruckhomogenisierung an, insbesondere jedoch nicht zwingend, mit einer gleich großen oder geringen Kraftbeaufschlagung der Masse, insbesondere also mit einem gleichgroßen oder kleineren Druck. Durch die Realisierung eines weiteren (vorherigen) mechanischen Bearbeitungsschrittes, insbesondere einer Hochdruckhomogenisierung kann die Kraftbeaufschlagung im (späteren bzw. eigentlichen) mechanischen Bearbeitungsschritt geringer ausfallen, als bei der zuvor beschriebenen Ausführung mit nur einem mechanischen Bearbeitungsschritt.

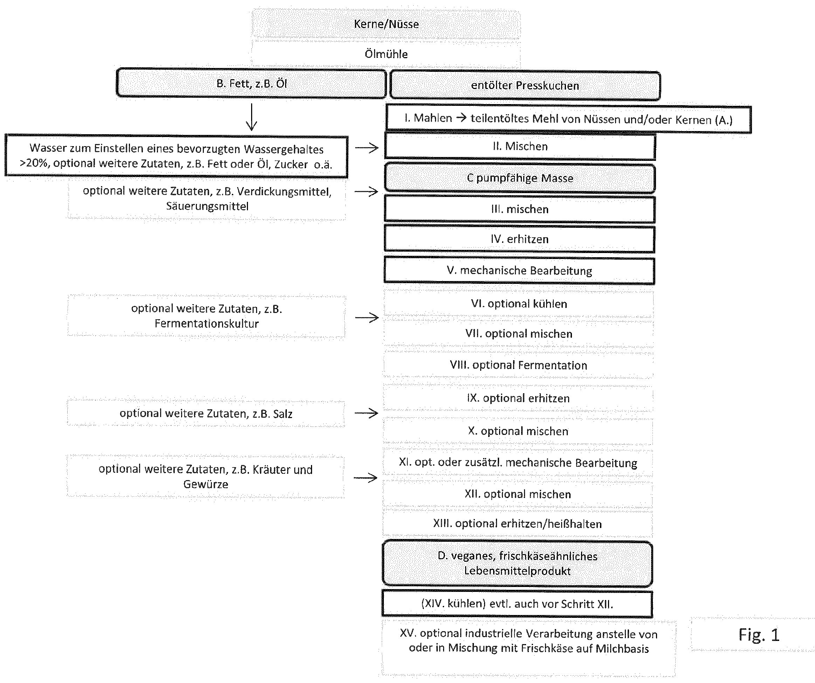

Im Hinblick auf die Auswirkungen des erfindungsgemäßen Erhitzungs- sowie mechanischen Bearbeitungsschrittes, insbesondere auf die Mikrostruktur des resultierenden Lebensmittelproduktes wird auf die entsprechenden Erläuterungen in der WO 2017 050 480 A1 verwiesen und dort insbesondere auf die Figuren 1 bis 4 mit zugehöriger Beschreibung.

Zum besseren Verständnis der Erfindung werden im Folgenden verwendete Begriffe und bevorzugte Analyse- bzw. Messwertverfahren definiert:
Bei den Partikelgrößenverteilungen der pumpfähigen Masse sowie des erhaltenen Lebensmittelproduktes handelt es sich bevorzugt um mittels eines Laserbeugungsspektrometers erhaltenen Partikelgrößenverteilungen, also um halblogarithmische Dichteverteilungen eines volumenspezifischen Äquivalentsdurchmessers x3 in einem, beispielhaft in Fig. 2 gezeigten, Partikelgrößenverteilungsdiagramm (halblogarithmische Dichteverteilungskurve), bei welchem auf der Abszissenachse (X-Achse) der volumenspezifische Äquivalenzdurchmesser x3 und auf der Ordinatenachse (Y-Achse) die prozentuale Häufigkeit (Partikelgrößenverteilungsdichte) der Partikel aufgetragen wird. Unter Partikeln sind dabei sämtliche mit einem Laserbeugungspektrometer erfassbare Einheiten zu verstehen, d.h. sowohl Feststoffe, Agglomerate, als auch Tröpfchen, wie Fetttropfchen. Sämtliche in der Anmeldung behandelten und beanspruchten Partikelgrößenverteilungen außer derjenigen des eingesetzten teilentölten Mehls wurden mit einem Laserbeugungsspektrometer LA-960 von Retsch Technology GmbH, Deutschland ermittelt, wobei der Berechnung immer ein Brechungsindex von 1,33 zugrundegelegt wurde. Die Messung der Partikelgrößenverteilung des nicht aufgeschlossenen, d.h. unveränderten Lebensmittelproduktes erfolgt durch Dispersion des Lebensmittelproduktes in destilliertem Wasser. Hierzu wurden die Proben unverdünnt in die mit destilliertem Wasser gefüllte Messzelle gegeben und es wurde viermal gemessen, wobei durch ein Umpumpen in der Messzelle Partikelagglomerate aufgebrochen wurden, bis sich ein stabiler Messwert einstellt. Die ersten drei Messungen dienen dem Nachweis, dass sich ein stabiler Messwert eingestellt hat. Für die Bestimmung der Partikelgrößenverteilung wird die vierte Messung herangezogen.

Um das Lebensmittelprodukt (zum Nachweis der Fettpartikel bzw. zum Befreien/Lösen der Fettpartikel) aus den Mikrogelpartikeln zu erreichen, wird ein Gewichtsanteil Lebensmittelproduktprobe, insbesondere 10g und 9 Gewichtsanteile SDS-EDTA-Lösung (0,25Gew.-% SDS; 0,25Gew.-% EDTA), insbesondere 90g dieser Lösung mit einem Magnetrührer bei 200 U/min bei Raumtemperatur für 30 min aufgeschlossen. Durch den Teilaufschluss lösen sich die vormals eingebundenen Fetttropfen aus den Mikrogelpartikeln und werden durch SDS stabilisiert. Bei SDS handelt es sich um Natriumdeodecylsulfat, also ein anionischen Tensid und bei EDTA um Ethylendiamintetraessigsäure.

Bei der Behandlung mit SDS/EDTA-Lösung muss von einem Teilaufschluss gesprochen werden, da es bei der angewandten Methode nicht zu einem vollständigen Aufschluss kommt und neben den freigesetzten Fetttropfen auch Partikel in der Messsuspension verbleiben. Die so hergestellte Messsuspension wird zur Messung in die mit destilliertem Wasser gefüllte Messzelle gegeben. Auch hier wird zur Bestimmung der Partikelgrößenverteilung mittels eines zuvor beschriebenen Laserbeu-gungsspektrometers bevorzugt viermal gemessen, wobei die kleinste gemessene Partikelgrößenverteilung zur Interpretation verwendet wird.

Im Folgenden werden die im Rahmen der Anmeldung herangezogenen Kennwerte der Partikelgrößenverteilungen erläutert.

x50,3 ist ein charakteristischer Kennwert für volumenbezogene Partikelgrößenverteilung. Diese wird in µm angegeben und bedeutet, dass 50% des gesamten Partikelvolumens aus Partikeln besteht, die kleiner sind als die mittlere Partikelgröße x50,3. Der Kennwert X50,3 gibt somit einen Hinweis auf die mittlere Partikelgröße und wird als solche bezeichnet.

Analog sagt der Kennwert x10,3, dass 10% des gesamten Partikelvolumens aus Partikel besteht, die kleiner sind als die Partikelgröße x10,3. Diese gibt somit einen Hinweis auf die typische Größe kleiner Partikel.

Ebenfalls analog besagt der Kennwert x90,3, dass 90% des gesamten Partikelvolumens aus Partikeln besteht, die kleiner sind als die Partikelgröße x90,3. Dieser Kennwert gibt somit einen Kennwert auf die typische Größe größerer Partikel.

Allgemein handelt es sich bei der Angabe x3 um einen volumenspezifischen Partikeläquivalenzd urchmesser.

q3 (x) bezeichnet die prozentuale Häufigkeit, d.h. die Partikelgrößenverteilungsdichte.

Für die im Rahmen dieser Patentanmeldung durchgeführten mikroskopischen Analyse wurde jeweils 1g nicht aufgeschlossener Probe in einem Laborröhrchen mit 9g Ringerlösung vermischt und über einen Laborröhrchenschüttler fein dispergiert. Die so hergestellte Dispersion wurde auf einen Objektträger aufgebracht und bei 40-facher Vergrößerung unter einem Lichtmikroskop analysiert.

Für die Analyse von teilaufgeschlossenen Proben wurde die teilaufgeschlossene Dispersion auf einen Objektträger aufgebracht, und bei 40-facher Vergrößerung unter einem Lichtmikroskop analysiert.

Festigkeitsmessung zur Bestimmung der Festigkeit wurden mittels einer Texturprüfmaschine (zwicki Z 5.0 TN, Zwick GmbH & Co. KG, Deutschland) durchgeführt. Für die Messungen wurden die Proben über 12 Stunden auf 10°C temperiert und erst unmittelbar vor der Messung aus der Kühlung genommen. Ein runder Prüfstempel mit einer Fläche von 1,27 cm2 dringt zur Messung mit einer Geschwindigkeit von 2 mm/Sek. 10 mm in die Probe ein.

Als Messwert der Festigkeit wird die maximale Kraftaufnahme des Messaufnehmers angegeben.

Für rheologische Messungen wurde ein Rotationsviskosimeter (Rheomat R180, ProRheo, Deutschland) verwendet. Gemessen wurde mit einem 14 mm Messkörper (Messkörper 3, ProRheo, Deutschland) in einem Probengefäß mit 55 mm Durchmesser. Die Messung wird bei einer eingestellten Drehzahl von 50 1/min durchgeführt (Messprogramm 3, Messkörper 3 ohne Messröhre). Über die Dauer von 4 min werden insgesamt 20 Messpunkte aufgezeichnet. Alle Proben wurden bei 10 °C ± 2 °C vermessen.

Zur sensorischen Charakterisierung der bevorzugten Textureigenschaft rau-bremsend wurde ein Sensorik-Panel gemäß DIN 10957 eingesetzt, wobei als Referenzprodukt für die Eigenschaft rau-bremsend ein Magerquark mit 20% Fett in der Trockenmasse herangezogen wurde.

Farb- und Helligkeitsmessungen wurden im CIELAB-Farbraum gemäß EN ISO 11664-4:2011 durchgeführt. Eingesetzt wurde hierzu: Farbspektrometer Dr. Lange spectro-color Typ LMG 183. Dabei handelt es sich bei den Werten L*, a* und b* um die in der DIN-Norm definierten kartesischen Koordinaten des Farbraums. Die L*-Achse beschreibt dabei Helligkeit (Luminanz) der Farbe mit Werten von 0 bis 100. Die L*-Achse wird auch als neutrale Grauachse bezeichnet, denn zwischen den Endpunkten schwarz (L* = 0) und weiß (L* = 100) sind alle unbunten Farben (Grautöne) enthalten. Die a*-Achse beschreibt den Grün- oder Rotanteil einer Farbe, wobei negative Werte für grün und positive Werte für rot stehen. Die b*-Achse beschreibt den Blau- oder Gelbanteil einer Farbe, wobei negative Werte für blau und positive Werte für gelb stehen.

Das Lebensmittelprodukt ist, wie erläutert, im Hinblick auf seine Mikrostrukturierung einem klassischen Frischkäse sehr ähnlich, was sich insbesondere auch auf die sensorischen Eigenschaften, insbesondere das Mundgefühl des Lebensmittelproduktes niederschlägt. So ist das Leit-Attribut der klassischen Frischkäsetypik der Texturbegriff raubremsend. Analog zum klassischem Frischkäse liegt die Bewertung dieses Sensorikmerkmals, welche wie oben erläutert durchzuführen ist unter Verwendung eines Magerquarks mit 20Gew.-% Fett in der Trockenmasse oberhalb von 2,5 und bevorzugt in einem Bereich zwischen 3 und 7,5. Ein solches Lebensmittelprodukt bzw. das Verfahrensergebnis des erfindungsgemäßen Verfahrens entspricht bevorzugt auch für die weiteren Texturattribute einer glatten Maße (Referenz kalte Butter), schnellschmelzend (Referenz kalter Schmand - minimale Bearbeitung) sowie weich (Referenz kalter Schmand gerührt) den Bewertungen von klassischem Frischkäse. Bevorzugt liegen auch hier die Bewertungen in den für rau-bremsend angegebenen Wertebereichen, wobei auch die weiteren sensorischen Analysen gemäß DIN 10957 durchgeführt werden.

Der Verfahrensschritt der Erhitzung wird besonders bevorzugt vor der mechanischen Bearbeitung durchgeführt, wobei es zweckmäßig ist, wenn die pumpfähige Masse noch im erhitzten Zustand mechanisch bearbeitet wird. Grundsätzlich ist es jedoch möglich, den Erhitzungsschritt vor und/oder während der mechanischen Bearbeitung durchzuführen. Auch ist es möglich, den Erhitzungsschritt ausschließlich vor oder ausschließlich während der mechanischen Bearbeitung durchzuführen. Wie später noch erläutert werden wird ist es bevorzugt, wenn der Erhitzungsschritt die Bedingungen einer Pasteurisation erfüllt, also so durchgeführt wird, dass die Temperatur, auf die erhitzt wurde, ausreichend lange gehalten wird, um ein bestimmtes Keimzahlergebnis, vorzugsweise von maximal 1000 Keimen/g Lebensmittelprodukt zu erzielen.

Im Hinblick auf die Temperaturwahl des Erhitzungsschrittes gibt es unterschiedliche Möglichkeiten. Wesentlich ist, dass die gewünschte Mikrostruktur (in Kombination mit der mechanischen Bearbeitung) erhalten wird. Erfindungsgemäß ist vorgesehen, dass eine Erhitzung auf eine Temperatur aus einem Temperaturbereich zwischen 65°C und 140°C, weiter bevorzugt zwischen 72°C und 138°C, noch weiter bevorzugt zwischen 72°C und 90°C erfolgt. Die Erhitzung erfolgt dabei erfindungsgemäß vor und/oder während der mechanischen Bearbeitung. Als Maß für einen ausreichenden Erhitzungsschritt kann auch ein im Zusammenhang mit der Erhitzung stehender Viskositätsanstieg herangezogen werden, also ein Vergleich der Viskosität der Masse vor und nach der Erhitzung. Bevorzugt wird die Erhitzung so ausgeführt, dass es durch den Erhitzungsschritt zu einem Viskositätsanstieg um mindestens 100%, bevorzugt um mindestens 300% kommt. Bevorzugt werden die Erhitzung und die mechanische Bearbeitung zusammen oder nacheinander so durchgeführt, dass es insgesamt durch den Erhitzungs- und mechanischen Bearbeitungsschritt zu einem Viskositätsanstieg von mindestens 250%, bevorzugt mindestens 500%, ganz besonders bevorzugt über 600% oder über 700% kommt.

Die Erhitzung erfolgt bevorzugt in einem Koch-Mischer, beispielsweise einer Stephan-Universalmaschine vom Typ UMC oder in einem Karl-Schnell-Prozess-Automat. Alternative Erhitzungsmöglichkeiten sind ebenfalls realisierbar. Ganz besonders bevorzugt erfolgt auch die Herstellung der pumpfähigen Masse durch Zugabe von Wasser in einer solchen Vorrichtung. Es hat sich überraschend herausgestellt, dass durch die Angleichung der

Mikrostruktur des Lebensmittelproduktes an die Mikrostruktur eines klassischen Frischkäses ein Frischkäse nicht nur hinsichtlich seiner Textureigenschaften gut simuliert bzw. nachgebildet werden kann sondern auch hinsichtlich seiner Helligkeit sowie Farbe, d.h. hinsichtlich der Koordinaten im CIELAB-Farbraum. Bevorzugt resultiert nämlich aus einem erfindungsgemäßen Erhitzungs- und/oder mechanischen Bearbeitungsschritt eine deutliche bzw. messbare Erhöhung der Helligkeit, d.h. der Basiskoordinate L* im CIELAB-Farbraum um einen Betrag von mindestens 5, vorzugsweise um einen Betrag aus einem Wertebereich zwischen 5 und 25. Hierdurch wird ein frischer bzw. gesunder optischer Eindruck des Lebensmittelproduktes erhalten bzw. sichergestellt, insbesondere dann, wenn die Basiskoordinate L* einen Wert von mindestens 80, insbesondere von mindestens 82, ganz besonders bevorzugt aus einem Wertebereich zwischen 80 und 95, noch weiter bevorzugt zwischen 82 und 95 oder mehr aufweist. Grundsätzlich wurde festgestellt, dass die besonders hohen Helligkeitswerte dann vergleichsweise einfach erreicht werden können, wenn die Nüsse und/oder Kerne zur Herstellung des teilentölten Mehls, beispielsweise ausschließlich Mandeln entsprechend ausgewählt werden. Auf eine entsprechende Auswahl der Nüsse und/oder Mandeln kommt es insbesondere im Hinblick auf die Einstellung der weiteren Koordinaten a* und b* im CIELAB-Farbraum an, da diese durch das erfindungsgemäße Verfahren weniger stark beeinflussbar sind als die Helligkeit L*. Um einen ganz besonders bevorzugten, möglichst weißen Farbton zu erzielen, beträgt beim Lebensmittelprodukt der Wert a* bevorzugt zwischen -3 und +1 und/oder der Wert b* zwischen -1 und +9. Ein solcher (sehr) weißer bzw. natürlicher Frischkäseeindruck kann insbesondere durch die Wahl von vergleichsweise hellen Nüssen und/oder Kernen zur Herstellung des teilentölten Mehls erreicht werden, beispielsweise indem das Lebensmittelprodukt, insbesondere ausschließlich, zumindest analog, auf Basis von teilentöltem Cashewkernmehl und/oder ganz besonders bevorzugt von teilentöltem Mandelmehl aus blanchierten oder naturbelassenen Mandeln hergestellt wird. Unter Blanchieren wird das Entfernen der dunklen Samenhaut vom hellen Mandelkern verstanden. Grundsätzlich ist es vorteilhaft, bei den zur Herstellung des teilentölten Mehls eingesetzten Nüssen und/oder Kernen eine etwaige dunkle Samenhaut zur Herstellung des teilentölten Mehls, bevorzugt durch Blanchieren zu entfernen. Anders ausgedrückt enthält das teilentölte Mehl bevorzugt nicht Bestandteile von etwaigen dunklen Samenhäuten der Nüsse und/oder Kerne, wodurch ein besonders helles, gleichförmiges Produkt erhalten werden kann. Alternativ können die eingesetzten Nüsse und/oder Kerne zur Herstellung des teilentölten Mehls naturbelassen werden/bleiben. Wie eingangs erläutert ist ein wesentlicher Schritt des erfindungsgemäßen

Verfahrens zur Erlangung des Lebensmittelproduktes die mechanische Bearbeitung der erhitzten pumpfähigen Masse, also die Realisierung eines im weitesten Sinne intensiven Homogenisierungsschrittes der hauptverantwortlich ist für die gewünschte Mikrostrukturierung. Insbesondere soll die mechanische Bearbeitung so ausgeführt werden, dass eine hohe mechanische Beanspruchung, insbesondere Druck- und/oder Scherkraftbeanspruchung der Partikel erfolgt. Besonders gute Erfahrungen wurden gemacht bei einer Ausführungsvariante des Verfahrens, bei der die mechanische Bearbeitung einen Hochdruckhomogenisierschritt umfasst, beispielsweise eine einstufige oder mehrstufige, insbesondere zweistufige Hochdruckhomogenisierung, wie diese beispielsweise zur Homogenisierung von Frischmilch eingesetzt wird. Unter Hochdruckhomogenisierung wird dabei das Fördern der pumpfähigen Masse durch eine Düse, beispielsweise Spaltdüse bei hohen Drücken, insbesondere zwischen 25 bar und 600 bar, ganz besonders bevorzugt zwischen 100 bar und 400 bar verstanden, wobei der Druckstrahl auf eine Prallfläche, beispielsweise einen Prallring trifft. Eine solche Hochdruckhomogenisierung kann einstufig erfolgen, dass also der gesamte Druckabbau mittels einer Düse bzw. in einem Homogenisierschritt erfolgt oder alternativ mehrstufig, insbesondere derart, dass ein stufenweiser Abbau eines Anfangsdrucks schlussendlich dann bis insbesondere auf Atmosphärendruck erfolgt. Lediglich beispielhaft kann für den mechanischen Bearbeitungsschritt eine zweistufige Hochdruckhomogenisiervorrichtung der Firma HST-Maschinenbau GmbH mit der Bezeichnung HL2.5-550K eingesetzt werden.

Alternativ zu einer zuvor beschriebenen Prallflächenhomogenisiervorrichtung ist es zur Durchführung des mechanischen Bearbeitungsschrittes möglich, Vorrichtungen einzusetzen, bei denen die für die Hochdruckhomogenisierung notwendigen Scherkräfte dadurch in die zu homogenisierende Flüssigkeit (pumpfähige Masse) eingebracht werden, dass diese mit hohem Druck, insbesondere zwischen 100bar und 3000bar, vorzugsweise zwischen 172bar und 2068bar, besonders bevorzugt zwischen 600bar und 2068bar oder höher durch eine Interaktionskammer mit Mikrokanälen gefördert wird, in denen die zu homogenisierende Flüssigkeit auf hohe Geschwindigkeiten beschleunigt wird, um hierdurch hohe Scherraten und Kräfte zu erzeugen. Derartige Hochdruckhomogenisiervorrichtungen für die Heißhochdruckhomogenisierung sind auf dem Markt unter dem Markennamen Microfluidizer von der Firma Microfluidics International Corporation, Westwood, USA erhältlich. Gute Erfahrungen wurden mit einer Vorrichtung mit der Bezeichnung M110EH gemacht, aufweisend einer Reaktionskammer vom Typ H30Z-G10Z.

Wie erläutert, ist die mechanische Bearbeitung jedoch ausdrücklich nicht auf eine Hochdruckhomogenisierung beschränkt. Andere mechanische Bearbeitungsmethoden, wie beispielsweise mit einem in der EP 2 052 772 B1 beschriebenen Dissolver oder geeignete Rotor-Stator-Systeme wie z.B. Scherpumpen, andere Pumpe-Düse-Systeme, Systeme in denen das Produkt Kavitation ausgesetzt ist, oder Systeme in denen das Produkt unter Druck einer spontanen Entspannung ausgesetzt ist sind zusätzlich oder alternativ einsetzbar.

Gemäß einer bevorzugten Ausführungsform beträgt der Gewichtsprozentanteil an teilentöltem Mehl aus Kernen und/oder Nüssen, bevorzugt ausschließlich Mandelmehl, am fertigen Lebensmittelprodukt und bevozugt bereits an der pumpfähigen Masse zwischen 2,63-26,26 Gew.-%. Das führt am Beispiel von Mandelmehl bei einem angenommenen Proteinanteil des teilentölten Mehls von etwa 50 Gew.-% zu möglichen Proteingehalten von 1,34-13,34 Gew.-% und Ölgehalten aus dem teilentölten Mehl von 0,37-3,70 Gew.-% im fertigen Lebensmittelprodukt und bevorzugt bereits in der fertigen pumpfähigen Masse. Bei einem angestrebten Fettgehalt des fertigen Produkts von 0,92-30,0 Gew.-%, ist in Abhängigkeit der eingesetzten Menge an teilentöltem Mehl ein Zusatz von Fett, insbesondere in Form von Öl, von 0,55-29,63 Gew.-% möglich. Der Gesamtanteil an Mandelöl im Lebensmittelprodukt und bevorzugt bereits in der pumpfähigen Masse kann 0-100 % des zugesetzten Fetts betragen.

Bei einem Mandelmehlanteil von 2,63-6,49 Gew.-% sollte gemäß einer bevorzugten Ausführungsform beachtet werden, dass mindestens 0,01-3,37 Gew.-% reines Fett (hierunter fällt, wie in der gesamten Offenbarung auch Öl) aus einer beliebigen Quelle zugesetzt werden sollte, um eine Trockenmasse von mindestens 6,0 % zu erreichen. Bei einem beispielsweise angestrebten absoluten Fettgehalt von 20 Gew.-% wäre beispielsweise der Einsatz von insgesamt 16,30-19,63 Gew.-% Fett aus einer oder beliebig vielen unterschiedlichen Quellen realisierbar.

Wie erwähnt ist es besonders bevorzug als teilentöltes Mehl ausschließlich teilentöltes Mandelmehl einzusetzen. Vermischt man das teilentölte Mandelmehl und Mandelöl beispielsweise in einem bevorzugten Verhältnis von 52,52 und 47,48, erhält man die typische Zusammensetzung von Mandeln. Wenn beispielsweise das Mandelmehl zu etwa 50,8 % aus Protein und noch einen Rest-Fettgehalt von 14,1% enthält, ist das natürliche Verhältnis von Mandelprotein zu Mandelöl in Mandeln erreicht das etwa bei 1:2, also 50% liegt.

Gemäß einer bevorzugten Ausführungsform werden, insbesondere bei einem ausschließlichen Einsatz von teilentöltem Mandelmehl als zum Einsatz kommendes teilentöltes Mehl, teilentöltes Mandelmehl und Mandelöl in dem Verhältnis eingesetzt, in welchem sie wie Mandelprotein und Mandelöl in natürlicherweise in Mandeln vorkommen. Das sind 52,52 % Mandelmehl und 47,48 % Mandelöl. Bei einem bevorzugten Mandelmehlanteil von 2,63-26,26 Gew.-% stammen 0,37-3,70 Gew.-% Öl aus dem Mandelmehl und es werden 2,37- 23,74 Gew.-% Mandelöl und 0-27,26 Gew.-% Fett oder Öl aus anderen Quellen eingesetzt, das aus einer oder mehreren alternativen pflanzlichen oder tierischen Quellen, stammen kann. Bei einem weiter bevorzugten Mandelmehlanteil von 5,25-10,50 Gew.-% stammen 0,74-1,48 Gew.-% Öl aus dem Mandelmehl und es werden 4,75-9,50 Gew.-% Mandelöl und 0-24,51 Gew.-% Fett oder Öl aus einer oder mehrerer alternativer Fettquellen eingesetzt. Das führt zu möglichen absoluten Fettgehalten von 5,49-30 Gew.-%. Besonders bevorzugt wird ein Mandelmehlanteil zwischen 7,88-10,50 Gew.-% und Fettgehalt zwischen 15,0-25,0 Gew.-% gewählt. Dieser kann durch die Kombination aus 7,12-9,5 Gew.-% Mandelöl und 4,02-16,77 Gew.-% Fett oder Öl aus alternativen Quellen erreicht werden, da 1,11-1,48 Gew.-% Öl bereits über das Mandelmehl zugegeben werden. Die besonders bevorzugte Trockenmasse liegt dabei zwischen 15,0 und 40,0 Gew.-%.

Aus der im Folgenden eingeblendeten Tabelle sind drei unterschiedliche Ausführungsformen ersichtlich, wobei für jede Ausführungsform eine bevorzugt, eine weiter bevorzugte und eine besonders bevorzugte Variante untereinander aufgeführt sind. Der Proteingehalt wurde berechnet unter der Annahme eines Proteinanteils von 50 Gew.% am eingesetzten teilentölten Mandelmehl - der tatsächliche Proteingehalt kann daher in Abhängigkeit der Mehlbeschaffenheit etwas abweichen. Bei sämtlichen Prozentangaben in der Tabelle sowie der gesamten Offenbarung handelt es sich um Gewichtsprozentangaben.

Bei der ersten Ausführungsform enthält das fertige Lebensmittelprodukt und bevorzugt bereits die pumpfähige Masse Mandelmehl und Mandelöl im zuvor erläuterten natürlichen Verhältnis. Bei der zweiten Ausführungsform wird ausschließlich Mandelöl als Fettquelle eingesetzt. Bei der dritten Ausführungsform kommt zusätzlich zu dem noch im teilentölten Mehl enthaltenen Mandelöl kein zusätzliches bzw. zugesetztes Mandelöl zum Einsatz. Die in der Tabelle aufgeführten unterschiedlichen drei Ausführungsformen mit ihren jeweiligen drei Unterausführungsformen (von oben nach unten: bevorzugt, weiter bevorzugt, besonders bevorzugt) sollen als offenbart gelten, wobei, wie erwähnt der Proteingehalt bei den angegebenen Fettgehalten von den angegebenen Werten abweichen kann bzw. sich anhand des tatsächlichen Verhältnisses von Fett und Protein im teilentölten Mandelmehl berechnen lässt.

| | Mandelmehlanteil [%] | Proteingehalt [%] | Ölgehalt aus dem Mandelmehl [%] | zugesetzter Mandelölanteil für natürliches Verhältnis [%] | Mandelöl gesamt [%] | zusätzlich mögliches Öl/Fett aus alternativen Quellen [%] | absolute Fettgehalte [%] |
|---|---|---|---|---|---|---|---|
| Mandelmehl und Mandelöl in natürlichem Verhältnis | 2,63-26,26 | 1,34-13,34 | 0,37-3,70 | 2,37-23,74 | 2,74-27,44 | 0-27,26 | 2,74-30,0 |
| | 5,25-10,50 | 2,67-5,33 | 0,74-1,48 | 4,75-9,50 | 5,49-10,98 | 0-24,51 | 5,49-30,0 |
| | 7,88-10,5 | 4,00-5,33 | 1,11-1,48 | 7,12-9,5 | 8,23-10,98 | 4,02-16,77 | 15,0-25,0 |
| nur Mandelöl als Fettquelle | 2,63-26,26 | 1,34-13,34 | 0,37-3,70 | 2,37-23,74 | 2,74-27,44 | 0 | 2,74-30,0 |
| | 5,25-10,50 | 2,67-5,33 | 0,74-1,48 | 4,75-9,50 | 5,49-10,98 | 0 | 5,49-26,65 |
| | 7,88-10,5 | 4,00-5,33 | 1,11-1,48 | 7,12-9,5 | 8,23-10,98 | 0 | 8,23-26,65 |
| keine Verwendung von zusätzlichem Mandelöl als Fettquelle | 2,63-26,26 | 1,34-13,34 | 0,37-3,70 | 0 | 0,37-3,70 | 0,55-29,63 | 0,92-30,0 |
| | 2,63-6,5 | 1,34-3,30 | 0,37-0,92 | 0 | 0,37-0,92 | 3,37-0,01 | 0,93-3,74 |
| | 2,63-26,26 | 1,34-13,34 | 0,37-3,70 | 0 | 0,37-3,70 | 16,30-19-63 | 20 |

In gleicher Weise als offenbart gelten sollen die o.g. Ausführungsformen, wenn diese zusätzlich oder alternativ zu entöltem Mandelmehl ein teilentöltes Mehl aus von Mandeln verschiedenen Nüssen und/oder Kernen, beispielsweise aus Cashewnüssen, Sonnenblumenkernen, etc. verwenden. Maßgeblich ist dann die letzte Parameterspalte als Zielvorgabe, also der absolute Fettgehalt des Lebensmittelproduktes, wobei die Spalte Ölgehalt aus dem Mandelmehl dann den Ölgehalt des zum Einsatz kommenden teilentölten Mehls wiedergibt. Hieraus lässt sich dann die erste Spalte (also der Mehlanteil) und der Proteingehalt berechnen, wobei hierzu der Proteingehalt des zum Einsatz kommenden teilentölten Mehls bestimmt werden oder bekannt sein muss. Um die vierte Parameter-Spalte zu berechnen, die dann überschrieben sein muss mit: "zugesetzter Nuss- und/oder Kernölanteil der zum Herstellen des eingesetzten Mehls verwendeten Nüsse und/oder Kerne für natürliches Verhältnis" errechnet sich dann aus dem jeweiligen natürlichen Verhältnis von Protein zu Fett des eingesetzten Mehls. Die sechste Parameter-Spalte beschreibt dann mögliches zusätzliches Fett aus anderen Quellen als diejenigen der zum Herstellen des Mehls eingesetzten Kerne und/oder Nüsse. Mit anderen Worten sollen also auch Ausführungsformen offenbart und beanspruchbar sein, bei denen kein oder nicht ausschließlich teilentöltes Mandelmehl sondern teilentöltes Mehl aus von Mandeln verschiedenen Kernen und/oder Nüssen zum Einsatz kommt, wobei bevorzugt das eingesetzte teilentölte Mehl und das zugehörige Öl, d.h. Öl aus der gleichen Quelle bzw. gleichen Art von Kernen und/oder Nüssen aus der das Mehl hergestellt wurde, im jeweiligen natürlichen Verhältnis eingesetzt werden - mit oder ohne Zusatz von Fett aus mindestens einer anderen Quelle. Auch ist es möglich nur Fett aus der gleichen Quelle zuzusetzen oder auch kein Fett aus der gleichen Quelle.

Besonders bevorzugt ist es, wenn der pH-Wert des Lebensmittels auf einen Wert <5,5, bevorzugt aus einem Wertebereich zwischen 4 und 5,4 eingestellt wird. Die Einstellung des pH-Wertes dient in erster Linie der Verbesserung der Haltbarkeit sowie einer positiven Beeinflussung der Proteindenaturierung und -quellung zur verbesserten Simulation der Eigenschaften eines klassischen Frischkäses. Die Säuerung dient ausdrücklich nicht der Einstellung der Konsistenz bzw. der rheologischen Eigenschaften, insbesondere da ein entsprechender Einfluss der Säuerung hinter den Einfluss der Erhitzung und der mechanischen Bearbeitung deutlich zurücktritt - insbesondere beträgt beispielhaft ein etwaiger Einfluss auf eine Konsistenzerhöhung bei direkter Säuerung der pumpfähigen Masse weniger als 15% des absoluten Viskositätsanstiegs bei der Anwendung des erfindungsgemäßen Verfahrens.

Im Hinblick auf den Zeitpunkt der Säuerung und das Säuerungsverfahren gibt es unterschiedliche Möglichkeiten. So kann die pumpfähige Masse gesäuert werden und zwar vor und/oder während und/oder nach der Erhitzung und/oder (vor- und/oder während und/oder nach) der mechanischen Bearbeitung. Grundsätzlich kann die Säuerung durch Zugabe einer für Lebensmittel zugelassenen bzw. geeigneten Säuere, wie Zitronensäure und/oder Essigsäure erfolgen. Zusätzlich oder alternativ kann eine Säuerung durch Zugabe von Mikroorganismen und entsprechende Fermentation erfolgen, wobei es grundsätzlich möglich ist, diese Fermentation in unterschiedlichen Verfahrensstufen durchzuführen. So kann die Fermentation der pumpfähigen Masse vor oder nach der Erhitzung sowie vor oder nach der mechanischen Bearbeitung durchgeführt werden.

Für den bevorzugten Fall, dass eine Erhitzung vor der Fermentierung bzw. Bakterienzugabe erfolgt, wird die Masse zunächst gekühlt auf eine Temperatur <45°C und bevorzugt auf eine Temperatur aus einem Wertebereich zwischen 16°C und 44°C. Auch ist es möglich, eine Säuerung durch Zugabe eines sauren Lebensmittels, wie Zitronensaft oder Essig vorzunehmen.

Für den Fall, dass die Säuerung unter Verwendung von Mikroorganismen erfolgt, wird bzw. werden bevorzugt einer oder mehrerer der folgenden Spezies eingesetzt: Streptococcus thermophilus; Lactobacillus delbrueckii ssp. bulgaricus; Lactobacillus delbrueckii ssp. lactis; Lactobacillus delbrueckii ssp. delbrueckii; Lactobacillus acidophilus; Lactobacillus plantarum; Lactobacillus rhamnosus; Lactobacillus casei; Lactobacillus paracasei; Lactobacillus buchneri; Lactobacillus parabuchneri; Lactococcus lactis ssp. cremoris; Lactococcus lactis ssp. lactis; Lactococcus lactis ssp. lactis biovar. diacetylactis; Leuconostoc lactis; Leuconostoc mesenteroides ssp. cremoris; Leuconostoc mesenteroides subsp. mesenteroides; Bifidobacterium lactis.

Wie eingangs bereits erwähnt ist es besonders bevorzugt, wenn der Schritt des Erhitzens in einem Koch-Mischer, beispielsweise einer Stephan-Universalmaschine, insbesondere vom Typ UMC oder alternativ in einem Karl-Schnell-Prozess-Automat durchgeführt wird, in denen dann auch bereits eine mechanische Bearbeitung erfolgt.

Wie ebenfalls eingangs bereits erwähnt wird der Erhitzungsschritt bevorzugt als Pasteurisationsschritt durchgeführt, bevorzugt bei einer Temperatur zwischen 65°C und 140°C und/oder einer Heißhaltezeit von unter 3600s, oder mindestens so, dass die Keimzahl des fertigen Lebensmittelproduktes < 1000 pro Gramm beträgt.

Bei Bedarf kann zur Herstellung der pumpfähigen Masse oder der fertigen pumpfähigen Masse (letzterer vor und/oder während und/oder nach der Erhitzung, und/oder vor und/oder während und/oder nach der mechanischen Bearbeitung) Salz zugegeben werden, insbesondere in einer Menge, dass der Salzgehalt des Lebensmittelproduktes zwischen 0,05 Gew.-% und 4 Gew.-%, ganz besonders bevorzugt zwischen 0,1 Gew.-% und 2 Gew.-% beträgt. Ggf. können zur Herstellung der pumpfähigen Masse oder der fertigen pumpfähigen Masse auch weitere oder alternative Zutaten zugegeben werden.

Als weitere oder alternative Zutaten können beispielsweise Kräuter und/oder Gewürze, und/oder Nüsse und/oder Kakao, und/oder Zucker, und/oder Gemüse, und/oder Früchte zugegeben werden, insbesondere in einer Gesamtmenge, dass der Gesamtgewichtsanteil der weiteren Zutaten im fertigen Lebensmittelprodukt zwischen 0,01 Gew.-% und 25 Gew.-% beträgt.

Auch ist es möglich und bevorzugt, dass während des Verfahrens ein für Lebensmittel zugelassenes Verdickungsmittel, insbesondere nach der Zusatzstoffzulassungsverordnung zugegeben wird, insbesondere Johannisbrotkernmehl, bevorzugt zum Zwecke einer Texturanpassung und/oder eines Trockenmassenaustauschs. Bevorzugt beträgt der Gesamtgewichtsanteil an Verdickungsmitteln im fertigen Lebensmittelprodukt zwischen 0,01 Gew.-% und 25 Gew.-%. Auch ist es möglich, auf Verdickungsmittel vollständig zu verzichten.

Auch ist es möglich während des Verfahrens mindestens einen Emulgator, vorzugsweise gemäß der Zulassungsverordnung zuzugeben, insbesondere mit einem Gesamtgewichtsanteil am fertigen Lebensmittelprodukt zwischen 0,01% und 25% zum Zwecke einer weiteren Optimierung der Fetttropfenzerkleinerung und Fetttropfeneinbindung. Der Einsatz eines Emulgators führt üblicherweise zur zusätzlichen Stabilisierung der im mechanischen Schritt erzeugten kleinen Tropfen, die dann im teilaufgeschlossenen Zustand als zusätzlicher Peak bei einer Partikelgröße <10 µm auftauchen. Bevorzugt wird auf den Einsatz von Emulgatoren verzichtet.

Besonders zweckmäßig ist es, wenn die Erhitzung und insbesondere die mechanische Bearbeitung so durchgeführt wird, dass die Partikelgrößenverteilung des Lebensmittelproduktes im nicht aufgeschlossenen Zustand einen x10,3 Partikeldurchmesser aus einem Wertebereich zwischen 5 µm und 15 µm aufweist und/oder einen x90,3 Partikeldurchmesser aus einem Wertebereich zwischen 20 µm und 75 µm.

Mit dem erfindungsgemäßen Verfahren ist ein Lebensmittelprodukt herstellbar, welches charakterisiert ist durch die eingangs im Zusammenhang mit dem erfindungsgemäßen Verfahren erläuterten Partikelgrößenparameter, insbesondere einem bevorzugten mittleren Partikeldurchmessers x50,3 <100 µm, vorzugsweise zwischen 10 µm und 40 µm im nicht aufgeschlossenen Zustand sowie durch zumindest einen Peak, insbesondere ein globales Maximum bei der Partikelgrößenverteilung bei einem volumenspezifischen Partikeldurchmesser (Äquivalenzdurchmesser) x3 < 10 µm. Im teilaufgeschlossenen Zustand ist verglichen mit dem nicht aufgeschlossenen Zustand ein zusätzlicher Peak in einem Größenbereich < 10 µm zu beobachten.

Wesentlich ist, dass sich das aus dem erfindungsgemäßen Verfahren resultierende Lebensmittelprodukt dadurch auszeichnet, dass dieses teilentöltes Mehl aus Nüssen und/oder Kernen insbesondere teilentöltes Mandelmehl enthält. Besonders bevorzugt beträgt der Anteil an teilentöltem Mandelmehl bezogen auf die Gesamtmenge an teilentöltem Mehl mindestens 50 Gew.-%, weiter bevorzugt mindestens 80 Gew.-%, wobei es ganz besonders bevorzugt ist, wenn ausschließlich teilentöltes Mandelmehl als Mehl im Lebensmittelprodukt enthalten ist. Das frischkäseähnliche Lebensmittelprodukt zeichnet sich durch eine Festigkeit aus einem Wertebereich zwischen 0,2 N und 7,0 N aus, bevorzugt zwischen 0,5 N und 2,5 N, wobei im Hinblick auf die Mess- bzw. Analysemethode auf vorstehende Ausführungen in der Beschreibung des Verfahrens verwiesen wird. Der Trockenmassegewichtsanteil beträgt zwischen 6 Gew.-% und 60 Gew.-%. Im Hinblick auf vorteilhafte Ausgestaltungen des Trockenmassegewichtsanteils wird ebenfalls auf vorstehende Erläuterungen in der Verfahrensbeschreibung verwiesen. Der Gesamtfettgewichtsanteil des Lebensmittelproduktes beträgt zwischen 0,92 und 30 Gew.-%.

Als erste wesentliche Verfahrensschritte A und B werden einerseits teilentöltes Mehl aus Nüssen und/oder Kernen, insbesondere ausschließlich aus Mandeln, bereitgestellt sowie Fett, insbesondere in Form von Öl und/oder verflüssigtem Fett, wobei eine Verflüssigung spätestens auch beim Erhitzungsschritt IV oder bevorzugt davor bereits beim Herstellen der pumpfähigen Masse durch entsprechende Temperaturwahl erfolgt. Bevorzugt ist das Herstellen des teilentölten Mehls nicht unmittelbarer Verfahrensbestandteil, d.h. bevorzugt ist es, wenn das teilentölte Mehl, insbesondere aus einer Ölmühle, bezogen wird, in welcher den Nüssen und/oder Kernen, insbesondere durch Pressen, Öl entzogen wird. Bei Bedarf kann das Herstellen des teilentölten Mehls jedoch Verfahrensbestandteil sein - in diesem Fall wird bevorzugt zunächst ein entölter Presskuchen aus Nüssen und/oder Kernen hergestellt, der dann gemahlen wird.

Jedenfalls wird als weiterer wesentlicher Verfahrensschritt die pumpfähige Masse C hergestellt und zwar durch Mischen (Schritt II) des teilentölten Mehls (A) des Fettes (B) sowie von Wasser (siehe linke Spalte), wobei der Wassergehalt bevorzugt auf mindestens 20 Gew.-% eingestellt wird.

Die im Folgenden im Zusammenhang mit dem Lebensmittelprodukt erläuterten vorteilhaften Ausgestaltungen beeinflussen auch vorteilhafte Ausgestaltungen des Verfahrens, indem dort entsprechende Zutaten zugegeben, Verfahrensschritte entsprechend ausgewählt und/oder Verhältniswerte eingestellt werden. Dies gilt selbstverständlich auch anders herum, vorteilhafte Ausgestaltungen bzw. Varianten des Verfahrens können zu ggf. nicht explizit erläuterten Ausgestaltungsvarianten des Lebensmittelproduktes führen.

Konkrete Beispiele für bevorzugte Verwendungen bzw. Einsatzzwecke sind die Verwendung als Brotaufstrich oder als Füllung oder Rezepturbestandteil von Backwaren, oder Süßwaren oder Antipasti, oder Nudeln, oder als Bestandteil von Feinkostsalaten, oder Soßen, oder Dressings, als Einsatz in Eiscreme oder, insbesondere pur zur Verwendung als Käseersatzstoff, insbesondere Frischkäseersatzstoff.

Auch ein Einsatz als Rohstoff oder Rezepturbestandteil anderer Käseersatzstoffe, wie beispielsweise Ersatzstoffe für Weißkäse, Mozzarella sowie Hart- und Schnittkäse, ist möglich.

Auch ist es möglich, dem Lebensmittelprodukt bei der Herstellung tierische Produkte, wie Sahne oder Butter zuzuführen, insbesondere zu Einstellung des Fettgehaltes und/oder das Lebensmittelprodukt als Zugabe zu butterhaltigen oder sahnehaltigen Lebensmitteln zu verwenden. Dann ist das Lebensmittelprodukt bzw. das Lebensmittel selbstverständlich nicht vegan. Im Folgenden wird anhand des Blockdiagramms gemäß Fig. 1 die mögliche Ausgestaltung eines erfindungsgemäßen Verfahrens mit einer Vielzahl von optionalen Verfahrensschritten erläutert.

Optional ist die Zugabe von Zutaten wie Fett, Öl und/oder Zucker möglich. Bei Bedarf können der pumpfähigen Masse weitere Zutaten, wie Verdickungsmittel, beispielsweise Johannisbrotkernmehl und/oder Säuerungsmittel, wie Zitronensäure und/oder Essigsäure zugegeben werden. Es erfolgt dann ein (weiterer) Mischschritt III und ein Erhitzungsschritt IV sowie eine mechanische Bearbeitung V, vorzugsweise ein Hochdruckhomogenisieren. Die Schritte II bis IV und ggf. auch noch die später zu erläuternden Schritte IV bis IX oder einzelne dieser Schritte können beispielsweise in einem Koch-Mischer durchgeführt werden.

Die Wassermenge, die Fettmenge sowie die Menge an fakultativen weiteren Zutaten wird bevorzugt so gewählt, dass der Gesamtfettgewichtsanteil zwischen 0,92 und 30 Gew.-%, insbesondere zwischen 5 und 30, weiter bevorzugt zwischen 15 und 25% beträgt und/oder der Trockenmassegewichtsanteil zwischen 6% und 60% beträgt, insbesondere zwischen 12 und 60%, weiter bevorzugt zwischen 15 und 40 Gew.-%.

Der Erhitzungsschritt muss vor und/oder während der mechanischen Bearbeitung erfolgen. Jedenfalls resultiert aus Erhitzung und mechanischer Bearbeitung ein Lebensmittelprodukt, welches bevorzugt vegan und frischkäseähnlich ist (siehe D).

Bevorzugt nach der mechanischen Bearbeitung sind eine Vielzahl von optionalen sich aus dem Blockdiagramm ergebenden Verfahrensschritten realisierbar, die einzeln oder in beliebiger Kombination durchführbar und auch beanspruchbar sind. So kann beispielsweise nach einem optionalen Kühlen nach der mechanischen Bearbeitung zusätzlich oder alternativ zu einer vorherigen Säurezugabe eine Fermentationskultur zum Zwecke der Säuerung zugegeben werden, wobei dann optional eine Mischung gemäß Schritt VII erfolgt und danach eine optionale Fermentation gemäß Schritt VIII. Zur Inaktivierung der Mikroorganismen kann dann optional ein Erhitz-ungsschritt IX erfolgen und bei Bedarf können dann weitere Zutaten, wie Salz zugegeben werden. Falls diese weiteren Zutaten, wie Salz zugegeben werden, erfolgt in Schritt X ein optionales Mischen.

Bei Bedarf können weitere oder alternative Zutaten wie Kräuter oder Gewürze zugegeben werden und/oder es kann eine weitere zusätzliche mechanische Bearbeitung erfolgen, beispielsweise eine zusätzliche Hochdruckhomogenisierung, wenn eine bestimmte Partikel-/Fettverteilung erreicht werden soll.

Bevorzugt wird, insbesondere wenn dies noch nicht vorher geschehen ist, das Lebensmittelprodukt gekühlt (siehe Schritt XIV).

Eine beispielhaft, nach dem Konzept der Erfindung ausgebildete Rezeptur/Verfahren lautet wie folgt:

| **Parameter/Zutaten** | **Anteil in Rezeptur [Gew.-%]** |
|---|---|
| Wasser | 67,5 |
| Mandelmehl | 10,5 |
| Mandelöl | 9,5 |
| Mandel gesamt | 20 |
| Kokosfett | 11 |
| Speisesalz | 0,75 |
| Verdickungsmittel | 0,5 |
| Säuerungsmittel | 0,25 |

Zur Herstellung der pumpfähigen Masse wird grundsätzlich bevorzugt Salz zugegeben, sowie Zitronensäure und zwar Salz in einer Menge, dass der Gesamtgewichtsanteil des Salzes am fertigen Lebensmittelprodukt 0,75 Gew-% beträgt und der Zitronensäuregewichtsanteil 0,25 Gew-%.

Die so erhaltene pumpfähige Masse wird in einem Kochmischer erhitzt auf eine Temperatur von 85°C, wobei diese Temperatur über 120s. gehalten wird.

Nach der Erhitzung erfolgt eine zweistufige Hochdruckhomogenisierung, wobei in der ersten Druckstufe 400 bar und in der zweiten Druckstufe 80 bar abgebaut werden.

Daraufhin erfolgt eine Kühlung auf Raumtemperatur, woraufhin Frischkäsekulturen zugesetzt werden und eine Fermentierung erfolgt.

## Patentansprüche

1. Verfahren zum Herstellen eines frischkäseähnlichen, bevorzugt veganen, Lebensmittelproduktes mit einer bei 10°C mit einer Texturprüfmaschine, bei der ein runder Pressstempel mit einer Fläche von 1,27cm² mit einer Geschwindigkeit von 2mm/s in eine über 12h auf 10°C temperierte Probe eindringt, gemessenen Festigkeit, die der maxmialen Kraftaufnahme des Kraftaufnehmers entspricht aus einem Wertebereich zwischen 0,2 N und 7,0 N, bevorzugt zwischen 0,5N und 2,5N einem Trockenmassegewichtsanteil zwischen 6% und 60% und einem Gesamtfettgewichtsanteil zwischen 0,92 % und 30%, mit den Schritten:
- Herstellen einer pumpfähigen Masse auf Basis von Wasser und Fett, insbesondere in Form von Öl, sowie Nüssen und/oder Kernen, bevorzugt auf Basis von Mandeln;
- Gewinnen des Lebensmittelproduktes aus der pumpfähigen Masse unter Erhitzen auf eine Temperatur aus einem Temperaturbereich zwischen 65°C und 140°C, bevorzugt zwischen 72°C und 140°C, und mechanischem Bearbeiten derart,
o dass das erhaltene Lebensmittelprodukt in einem nicht aufgeschlossenen Zustand eine Partikelgrößenverteilung aufweist, die **gekennzeichnet ist durch** eine in destilliertem Wasser mit einem Laserbeugungsspektrometer gemessene Partikelgrößenverteilung mit einem mittleren Partikeldurchmesser x50,3 <100 µm, bevorzugt zwischen 10 und 40 µm, sowie **durch** zumindest einen Peak, insbesondere ein globales Maximum, bei einem Partikeldurchmesser x3 >10 µm,
und derart,
o dass das Lebensmittelprodukt in einem teilaufgeschlossenen Zustand, welcher erhalten wird **durch** Mischen eines Gewichtsteils des Lebensmittelproduktes mit neun Gewichtsteilen einer SDS-EDTA-Lösung (0,25% SDS; 0,25% EDTA), eine in destilliertem Wasser mit einem Laserbeugungsspektrometer gemessene Partikelgrößenverteilung aufweist, die gegenüber dem nicht aufgeschlossenen Zustand mindestens einen zusätzlichen Peak bei einem Partikeldurchmesser x3 <10 µm aufweist.
wobei der Erhitzungsschritt vor und/oder während der mechanischen Bearbeitung durchgeführt wird,
**dadurch** gekennzeichnet,
dass die pumpfähige Masse, ohne zunächst eine pastöse Masse aus Kernen und/oder Nüssen herzustellen, hergestellt wird **durch** Mischen von teilentöltem Mehl von den Nüssen und/oder Kernen, bevorzugt Mandelmehl, aufweisend einen Fettgewichtsanteil zwischen 5 und 20 Gew.-% sowie einen Wassergehalt zwischen 4 und 9 Gew.%, dem Wasser sowie dem Fett, insbesondere in Form von Öl,

2. Verfahren nach Anspruch 1,
**dadurch gekennzeichnet,**
**dass** zum Herstellen der pumpfähigen Masse das teilentölte Mehl, insbesondere Mandelmehl, in einer Menge zugegeben wird, dass der Gewichtsprozentanteil des teilentölten Mehls im Lebensmittelprodukt zwischen 2,63 und 26,26%, vorzugsweise zwischen 5,25 und 10,50%, weiter bevorzugt zwischen 7,88 und 10,50% oder zwischen 2,63 und 6,50% beträgt.

3. Verfahren nach einem der Ansprüche 1 oder 2,
**dadurch gekennzeichnet,**
**dass** das teilentölte Mehl, insbesondere das Mandelmehl, eine Partikelgrößenverteilung aufweist, die **gekennzeichnet ist durch** einen mittleren Partikeldurchmesser ×50,3 zwischen 50µm und 500µm, vorzugsweise zwischen 100µm und 400µm, ganz besonders bevorzugt zwischen 100µm und 300µm , noch weiter bevorzugt zwischen 50µm und 150µm.

4. Verfahren nach einem der vorhergehenden Ansprüche,
**dadurch gekennzeichnet,**
**dass** das zugegebene Fett ausschließlich aus Mandelöl besteht.

5. Verfahren nach einem der Ansprüche 1 bis 3,
**dadurch gekennzeichnet,**
**dass** das zugegebene Fett kein Mandelöl enthält.

6. Verfahren nach einem der Ansprüche 1 bis 3,
**dadurch gekennzeichnet,**
**dass** das zugegebene Fett einen Anteil an Mandelöl und Nicht-Mandelfett enthält.

7. Verfahren nach einem der Ansprüche 1 bis 3,
**dadurch gekennzeichnet,**
**dass** das zugegebene Fett kein Öl aus der Art von Kernen und/oder Nüssen enthält, aus denen das teilentölte Mehl hergestellt wurde.

8. Verfahren nach einem der Ansprüche 1 bis 3,
**dadurch gekennzeichnet,**
**dass** das zugegebene Fett kein Öl aus der Art von Kernen und/oder Nüssen aus denen das teilentölte Mehl hergestellt wurde enthält, oder einen Anteil an solchem Fett sowie Fett aus einer anderen Quelle, insbesondere einer anderen Art von Kernen und/oder Nüssen, enthält.

9. Verfahren nach einem der Ansprüche 1 bis 3,
**dadurch gekennzeichnet,**
**dass** das zugegebene Fett Mandelöl enthält oder aus Mandelöl besteht, so dass im Lebensmittelprodukt der Gesamtmandelölanteil zwischen 0,92 und 30,0 Gew-%, bevorzugt zwischen 5,49 und 10,98 Gew.-%, weiter bevorzugt zwischen 8,23 und 10.98% beträgt, oder dass das zugegebene Fett kein Mandelöl enthält und der aus teilentöltem Mandelmehl resultierende Mandelölanteil im Lebensmittelprodukt zwischen 0,37 und 3,70 Gew.-%, bevorzugt zwischen 0,37 und 0,92 Gew.-% beträgt.

10. Verfahren nach einem der vorhergehenden Ansprüche,
**dadurch gekennzeichnet,**
**dass** das Fett in Form von Öl zugegeben wird und/oder beim Herstellen der pumpfähigen Masse so erhitzt wird, dass es in der pumpfähigen Masse flüssig ist.

11. Verfahren nach einem der vorhergehenden Ansprüche,
**dadurch gekennzeichnet,**
**dass** zumindest ein Gewichtsprozentanteil des zugegebenen Fettes, insbesondere von mindestens 30%, bevorzugt von mindestens 50%, weiter bevorzugt von mindestens 90%, ganz besonders bevorzugt von 100%, raffiniert und/oder gefiltert und/oder gebleicht und/oder desodorisiert ist.

12. Verfahren nach einem der vorhergehenden Ansprüche,
**dadurch gekennzeichnet,**
**dass** das Erhitzen und/oder das mechanische Bearbeiten derart durchgeführt wird, dass die Farbe des Lebensmittelproduktes im CIELAB-Farbraum mit den kartesischen Basiskoordinaten L*, a*, b*, gemäß EN ISO 11664-4:2011 definiert ist durch L* ≥80, bevorzugt ≥82 und/oder a* zwischen -3 und +1 und/oder b* zwischen -1 und +9 und/oder derart, dass durch das Erhitzen und/oder die mechanische Bearbeitung im CIELAB-Farbraum mit den kartesischen Koordinaten L*, a*, b*, gemäß EN ISO 11664-4:2011 L* um mindestens 5, bevorzugt um einen Wert aus einem Wertebereich zwischen 5 und 25 erhöht wird.

13. Verfahren nach einem der vorhergehenden Ansprüche,
**dadurch gekennzeichnet,**
**dass** das teilentölte Mehl keine gerösteten und/oder keine getrockneten Nüsse und/oder Kerne enthält.

14. Verfahren nach einem der vorhergehenden Ansprüche,
**dadurch gekennzeichnet,**
**dass** der pH-Wert des Lebensmittelproduktes, insbesondere durch Säuern der pumpfähigen Masse vor und/oder während und/oder nach der Erhitzung auf einen Wert kleiner 5,5 und/oder aus einem Wertebereich zwischen 4 und 5,4 eingestellt wird.

15. Verfahren nach einem der vorhergehenden Ansprüche,
**dadurch gekennzeichnet,**
**dass**, insbesondere ausschließlich, zur Einstellung eines gewünschten Geschmacksprofils Zucker, bevorzugt mit einem auf das Gesamtgewicht der pumpfähigen Masse bezogenen Gewichtsprozentanteil zwischen 0,1% und 15%,zugegeben wird.

## Claims

1. A method for producing a cream-cheese-like, preferably vegan, food product having a firmness corresponding to the maximum force absorption of the force transducer from a value range between 0.2 N and 7.0 N, preferably between 0.5 N and 2.5 N, measured at 10 °C by means of a texture testing machine in which a round press plunger having an area of 1.27 cm² is introduced into a sample kept at a temperature of 10 °C for 12 h at a speed of 2 mm/s, a proportion by weight of dry matter between 6 % and 60 % and a total proportion by weight of fat between 0.92 % and 30 %, the method comprising the steps of
- producing a pumpable mass based on water and fat, in particular in the form of oil, and nuts and/or seeds, preferably based on almonds;
- obtaining the food product from the pumpable mass by heating to a temperature from a temperature range between 65 °C and 140 °C, preferably between 72 °C and 140 °C, and mechanical processing in such a manner that
∘ in an insolubilized state, the obtained food product has a particle size distribution which is **characterized by** a particle size distribution having a mean particle diameter x50.3 < 100 µm, preferably between 10 µm and 40 µm, and by at least one peak, in particular a global maximum, at a particle diameter x3 > 10 µm, measured in distilled water by means of a laser diffraction spectrometer,
and in such a manner that
∘ in a partially solubilized state, which is obtained by mixing one part by weight of the food product with nine parts by weight of an SDS-EDTA-solution (0.25 % SDS; 0.25 % EDTA), the food product has a particle size distribution which has at least one additional peak at a particle diameter x3 < 10 µm compared to the insolubilized state, measured in distilled water by means of a laser diffraction spectrometer,
the heating step being performed before and/or during the mechanical processing,
**characterized in that**
the pumpable mass is produced, without first producing a pasty from seeds and/or nuts, by mixing partially de-oiled flour with the water and the fat, in particular in the form of oil, the de-oiled flour being made of the nuts and/or seeds, preferably almond flour, which has a proportion by weight of fat between 5 % by weight and 20 % by weight and a water content between 4 % by weight and 9 % by weight.

2. The method according to claim 1,
**characterized in that**,
for producing the pumpable mass, the partially de-oiled flour, in particular almond flour, is added in such an amount that the percentage by weight of the partially de-oiled flour in the food product is between 2.63 % and 26.26 %, preferably between 5.25% and 10.50 %, more preferably between 7.88% and 10.50 % or between 2.63 % and 6.50 %.

3. The method according to claim 1 or 2,
**characterized in that**
the partially de-oiled flour, in particular the almond flour, has a particle size distribution which is **characterized by** a mean particle diameter x50.3 between 50 µm and 500 µm, preferably between 100 µm and 400 µm, particularly preferably between 100 µm and 300 µm, more preferably between 50 µm and 150 µm.

4. The method according to any one of the preceding claims,
**characterized in that**
the added fat consists only of almond oil.

5. The method according to any one of claims 1 to 3,
**characterized in that**
the added fat does not contain almond oil.

6. The method according to any one of claims 1 to 3,
**characterized in that**
the added fat contains a proportion of almond oil and non-almond fat.

7. The method according to any one of claims 1 to 3,
**characterized in that**
the added fat does not contain oil from the type of seeds and/or nuts from which the partially de-oiled flour was produced.

8. The method according to any one of claims 1 to 3,
**characterized in that**
the added fat does not contain oil from the type of seeds and/or nuts from which the partially de-oiled flour was produced or that the added fat contains a proportion of such a fat and fat from another source, in particular another type of seeds and/or nuts.

9. The method according to any one claims 1 to 3,
**characterized in that**
the added fat contains almond oil or consists of almond oil, the total proportion of almond oil in the food product thus being between 0.92 % by weight and 30.0 % by weight, preferably between 5.49 % by weight and 10.98 % by weight, more preferably between 8.23 % by weight and 10.98 % by weight, or that the added fat does not contain almond oil and the proportion of almond oil resulting from the partially de-oiled almond flour in the food product is between 0.37 % by weight and 3.70% by weight, preferably between 0.37 % by weight and 0.92 % by weight.

10. The method according to any one of the preceding claims,
**characterized in that**
the fat is added in the form of oil and/or is heated during the production of the pumpable mass in such a manner that it is liquid in the pumpable mass.

11. The method according to any one of the preceding claims,
**characterized in that**
at least a percentage by weight of the added fat, in particular of at least 30 %, preferably of at least 50 %, more preferably of at least 90 %, particularly preferably of 100%, is refined and/or filtered and/or bleached and/or deodorized.

12. The method according to any one of the preceding claims,
**characterized in that**
the heating and/or the mechanical processing is performed in such a manner that the color of the food product is defined in the CIELAB color space with the Cartesian basis coordinates L*, a*, b* according to EN ISO 11664-4:2011 by L* ≥ 80, preferably ≥ 82 and/or a* between -3 and +1 and/or b* between -1 and +9 and/or in such a manner that L* is increased by at least 5, preferably by a value from a value range between 5 and 25, by the heating and/or the mechanical processing in the CIELAB color space with the Cartesian coordinates L*, a*, b*, according to EN ISO 11664-4:2011.

13. The method according to any one of the preceding claims,
**characterized in that**
the partially de-oiled flour does not contain roasted and/or dried nuts and/or seeds.

14. The method according to any one of the preceding claims,
**characterized in that**
the pH of the food product is set to a value of less than 5.5 and/or from a value range between 4 and 5.4, in particular by acidifying the pumpable mass before and/or during and/or after the heating.

15. The method according to any one of the preceding claims,
**characterized in that**,
sugar, preferably having a percentage by weight between 0.1 % and 15 % in relation to the total weight of the pumpable mass, is added, in particular merely, for setting a desired flavor profile.

## Revendications

1. Procédé de fabrication d'un produit alimentaire de type fromage frais, de préférence végétalien, ayant une fermeté correspondant à l'absorption de force maximale du capteur de force d'une plage de valeurs entre 0,2 N et 7,0 N, de préférence entre 0,5 N et 2,5 N, mesurée à 10 °C au moyen d'une machine de contrôle de texture dans laquelle un poinçon de presse rond ayant une surface de 1,27 cm² est inséré dans un échantillon maintenu à une température de 10 °C pendant 12 h à une vitesse de 2 mm/s, une proportion en poids de matière sèche entre 6 % et 60 % et une proportion en poids de graisse totale entre 0,92 % et 30 %, le procédé comprenant les étapes consistant à :
- produire une masse pompable à base d'eau et de graisse, notamment sous la forme d'huile, et à base de noix et/ou de graines, de préférence à base d'amandes ;
- obtenir le produit alimentaire à partir de la masse pompable en chauffant la masse pompable à une température d'une plage de températures entre 65 °C et 140 °C, de préférence entre 72 °C et 140 °C, et en traitant la masse pompable de manière mécanique de telle manière que,
∘ dans un état non dissous, le produit alimentaire obtenu a une distribution granulométrique des particules qui est **caractérisée par** une distribution granulométrique des particules qui a un diamètre particulaire moyen de x50,3 < 100 µm, de préférence entre 10 µm et 40 µm, et par au moins un pic, notamment un maximum global, à un diamètre particulaire de x3 > 10 µm, la distribution granulométrique des particules étant mesurée dans l'eau distillée au moyen d'un spectromètre à diffraction laser,
et de telle manière que,
∘ dans un état partiellement dissous qui est obtenu par le mélange d'une partie en poids du produit alimentaire avec neuf parties en poids d'une solution SDS-EDTA (0,25 % SDS; 0,25 % EDTA), le produit alimentaire a une distribution granulométrique des particules qui a au moins un pic additionnel à un diamètre particulaire de x3 < 10 µm par rapport à l'état non dissous, la distribution granulométrique des particules étant mesurée dans l'eau distillée au moyen d'un spectromètre à diffraction laser,
l'étape de chauffage étant effectuée avant et/ou pendant le traitement mécanique,
**caractérisé en ce que**
la masse pompable est produite par le mélange de la farine partiellement déshuilée des noix et/ou graines, de préférence de la farine d'amande, avec l'eau et la graisse, notamment sous forme d'huile, sans produire au préalable une masse pâteuse à partir des graines et/ou noix, la farine partiellement déshuilée ayant une proportion en poids de graisse entre 5 % en poids et 20 % en poids et une teneur en eau entre 4 % en poids et 9 % en poids.

2. Procédé selon la revendication 1,
**caractérisé en ce que**,
pour produire la masse pompable, la farine partiellement déshuilée, notamment la farine d'amande, est ajoutée en une quantité telle que le pourcentage en poids de la farine partiellement déshuilée dans le produit alimentaire est entre 2,63 % et 26,26 %, de préférence entre 5,25 % et 10,50 %, plus préférentiellement entre 7,88 % et 10,50 % ou entre 2,63 % et 6,50 %.

3. Procédé selon la revendication 1 ou la revendication 2,
**caractérisé en ce que**
la farine partiellement déshuilée, notamment la farine d'amande, a une distribution granulométrique des particules qui est **caractérisée par** un diamètre particulaire moyen de x50,3 entre 50 µm et 500 µm, de préférence entre 100 µm et 400 µm, plus préférentiellement entre 100 µm et 300 µm, encore plus préférentiellement entre 50 µm et 150 µm.

4. Procédé selon l'une quelconque des revendications précédentes,
**caractérisé en ce que**
la graisse ajoutée est composée exclusivement d'huile d'amande.

5. Procédé selon l'une quelconque des revendications 1 à 3,
**caractérisé en ce que**
la graisse ajoutée ne contient pas d'huile d'amande.

6. Procédé selon l'une quelconque des revendications 1 à 3,
**caractérisé en ce que**
la graisse ajoutée contient une proportion d'huile d'amande et de graisse non-amande.

7. Procédé selon l'une quelconque des revendications 1 à 3,
**caractérisé en ce que**
la graisse ajoutée ne contient pas d'huile du type de graines et/ou noix à partir desquelles la farine partiellement déshuilée a été produite.

8. Procédé selon l'une quelconque des revendications 1 à 3,
**caractérisé en ce que**
la graisse ajoutée ne contient pas d'huile du type de graines et/ou noix à partir desquelles la farine partiellement déshuilée a été produite, ou que la graisse ajoutée contient une proportion d'une telle graisse et de la graisse d'une autre source, notamment d'un autre type de graines et/ou noix.

9. Procédé selon l'une quelconque des revendications 1 à 3,
**caractérisé en ce que**
la graisse ajoutée contient d'huile d'amande ou est composée d'huile d'amande, de sorte que la proportion totale d'huile d'amande dans le produit alimentaire est entre 0,92 % en poids et 30,0 % en poids, de préférence entre 5,49 % en poids et 10,98 % en poids, plus préférentiellement entre 8,23 % en poids et 10,98 % en poids, ou que la graisse ajoutée ne contient pas d'huile d'amande et la proportion d'huile d'amande résultant de la farine d'amande partiellement déshuilée dans le produit alimentaire est entre 0,37 % en poids et 3,70 % en poids, de préférence entre 0,37 % en poids et 0,92 % en poids.

10. Procédé selon l'une quelconque des revendications précédentes,
**caractérisé en ce que**
la graisse est ajoutée sous forme d'huile et/ou est chauffée pendant la production de la masse pompable de telle manière que la graisse est liquide dans la masse pompable.

11. Procédé selon l'une quelconque des revendications précédentes,
**caractérisé en ce**
**qu'**au moins un pourcentage en poids de la graisse ajoutée, notamment d'au moins 30 %, de préférence d'au moins 50 %, plus préférentiellement d'au moins 90 %, encore plus préférentiellement de 100 %, est raffiné et/ou filtré et/ou blanchi et/ou désodorisé.

12. Procédé selon l'une quelconque des revendications précédentes,
**caractérisé en ce que**
le chauffage et/ou le traitement mécanique est/sont effectué(s) de telle manière que la couleur du produit alimentaire est définie dans l'espace de couleur CIELAB avec les coordonnées de base cartésiennes L*, a*, b* selon EN ISO 11664-4:2011 par L* ≥ 80, de préférence ≥ 82 et/ou a* entre -3 et +1 et/ou b* entre -1 et +9 et/ou de telle manière que L* est augmenté d'au moins 5, de préférence d'une valeur d'une plage de valeurs entre 5 et 25, par le chauffage et/ou le traitement mécanique dans l'espace de couleur CIELAB avec les coordonnées de base cartésiennes L*, a*, b* selon EN ISO 11664-4:2011.

13. Procédé selon l'une quelconque des revendications précédentes,
**caractérisé en ce que**
la farine partiellement déshuilée ne contient pas de noix et/ou graines grillées et/ou séchées.

14. Procédé selon l'une quelconque des revendications précédentes,
**caractérisé en ce que**
le pH du produit alimentaire est réglé sur une valeur inférieure à 5,5 et/ou d'une plage de valeurs entre 4 et 5,4, notamment par l'acidification de la masse pompable avant et/ou pendant et/ou après le chauffage.

15. Procédé selon l'une quelconque des revendications précédentes,
**caractérisé en ce que**
du sucre, qui a de préférence un pourcentage en poids entre 0,1 % et 15 % par rapport au poids total de la masse pompable, est ajouté, notamment exclusivement, pour régler un profil de saveur souhaité.
